# EUROPEAN PATENT APPLICATION

(11) **EP 4 307 424 A1**
(43) Date of publication of application: **17.01.2024**
(21) Application number: 22927579.7
(22) Date of filing: 23.05.2022
(51) Int. Cl.: H01M 10/0567, H01M 10/0568, H01M 10/04

(54) **SECONDARY BATTERY, BATTERY MODULE, BATTERY PACK, AND ELECTRIC APPARATUS**

(71) Applicant: Contemporary Amperex Technology Co., Limited, Ningde City, Fujian 352100 (CN)
(72) Inventor: WU, Zeli, Ningde, Fujian 352100 (CN); HAN, Changlong, Ningde, Fujian 352100 (CN); CHEN, Huiling, Ningde, Fujian 352100 (CN); GUO, Jie, Ningde, Fujian 352100 (CN); HUANG, Lei, Ningde, Fujian 352100 (CN); ZHANG, Cuiping, Ningde, Fujian 352100 (CN); LIU, Wenhao, Ningde, Fujian 352100 (CN)
(74) Representative: Gong, Jinping
(86) International application number: PCT/CN2022/094505
(87) International publication number: WO 2023/225800

(57) **Abstract**

The present application refers to a secondary battery, a battery module, a battery pack and an electrical device. The secondary battery includes a battery housing, an electrode assembly contained in the battery housing and a non-aqueous electrolyte, wherein the non-aqueous electrolyte includes a compound represented by Formula I and based on the total mass of the non-aqueous electrolyte, the compound represented by Formula I is present in an amount of A1% by mass; the secondary battery has a group margin B and the secondary battery satisfies: B is from 0.88 to 0.99, B/A1 is from 0.5 to 45. This application can provide a secondary battery having both high group margin design and high safety performance, and meanwhile having good cycle performance and kinetic performance.

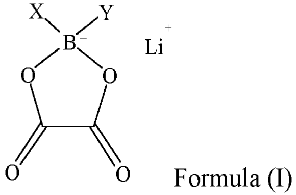

## Description

### TECHNICAL FIELD

This application belongs to the field of battery, and specifically relates to a secondary battery, battery module, battery pack and electrical device.

### BACKGROUND

In recent years, secondary batteries have been widely used in energy storage power systems such as hydraulic, thermal, wind and solar power plants, as well as in many fields such as electric tools, electric bicycles, electric motorcycles, electric vehicles, military equipment, and aerospace. With the application and promotion of secondary batteries, the requirements for their energy density are getting higher and higher. In order to increase the energy density of the secondary battery, the generally adopted technical solution is to design the higher and higher group margin of the secondary battery, which however leads to a smaller and smaller residual space of the secondary battery and thus insufficient space to accommodate the gas generated during the processes of formation, charge and discharge, and storage and the increased pressure on the battery housing, thereby seriously deteriorating the safety performance of the secondary battery. Therefore, there is a need for a secondary battery having great performance in both energy density and safety.

### SUMMARY

The purpose of this application is to provide a secondary battery, a battery module, a battery pack and an electrical device, aiming to make the secondary battery having both high group margin design and high safety performance, and meanwhile having good cycle performance and kinetic performance.

The first aspect of the present application provides a secondary battery, comprising a battery housing, an electrode assembly contained in the battery housing and a non-aqueous electrolyte, wherein the non-aqueous electrolyte represent H atom, a halogen atom, C1-C20 alkyl group, C2-C20 alkenyl group, C2-C20 alkynyl group, C6-C20 aryl group, C1-C20 haloalkyl group, C2-C20 haloalkenyl group, C2-C20 haloalkyne group, C6-C20 haloaryl group, C1-C20 alkoxy group, C2-C20 alkenoxy group, C2-C20 alkynloxy group, C6-C20 aryloxy group, C1-C20 haloalkoxy group, C2-C20 haloalkenoxy group, C2-C20 haloalkynloxy group, C6-C20 haloaryloxy group or a combination thereof, and at least one of X and Y represents a fluorine atom or a group containing fluorine atom; 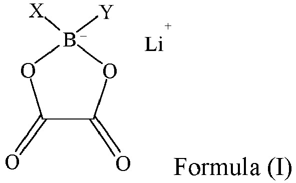 based on the total mass of the non-aqueous electrolyte, the compound represented by Formula I is present in an amount of A1% by mass; the secondary battery has a group margin B and the secondary battery satisfies: B is from 0.88 to 0.99, B/A1 is from 0.5 to 45.

The inventors of the present application have found in the research that, when the non-aqueous electrolyte comprises a compound represented by Formula I and its content A1% and the group margin B of the secondary battery satisfy the B/A1 of from 0.5 to 45, the secondary battery can simultaneously have high group margin design and high safety performance, and meanwhile have good cycle performance and kinetic performance. On the one hand, the compound represented by Formula I can form a uniform, dense and stable interphase film at both the positive electrode and the negative electrode simultaneously, which reduces the direct contact between the active material (positive electrode active material and negative electrode active material) and the non-aqueous electrolyte and reduces the damage and regeneration of positive electrode interphase film and negative electrode interphase film, thereby reducing the generation of gas and the consumption of active lithium ions in the process and reducing battery expansion and improving the capacity retention rate of the battery; on the other hand, the compound represented by Formula I can also stabilize the crystal structure of positive electrode active material, reduce the precipitation of lattice oxygen and the dissolution of transition metal ion, thereby reducing a series of side reactions caused by the precipitation of lattice oxygen and the dissolution of transition metal ion and thereby reducing battery expansion.

In any embodiment of the present application, B is from 0.90 to 0.95. As a result, the secondary battery can be provided with higher energy density without affecting the safety performance of the secondary battery.

In any embodiment of the present application, B/A1 is from 4 to 20, optionally from 10 to 20. As a result, the effect of the compound represented by Formula I on reducing gas generation and improving capacity retention rate can be fully exerted.

In any embodiment of the present application, A1 is greater than or equals to 0.02 and less than 2, and optionally, A1 is from 0.02 to 1. As a result, it helps to better reduce gas generation and active lithium ion consumption, thereby reducing battery expansion and improving capacity retention.

In any embodiment of the present application, the non-aqueous electrolyte further comprises a first lithium salt being lithium hexafluorophosphate, and wherein the first lithium salt is present in an amount of A2% by mass of greater than 0 and less than or equal to 14, optionally from 6 to 14, based on the total mass of the non-aqueous electrolyte,

In any embodiment of the present application, optionally, 10≤A2/A1≤600, more optionally 60≤A2/A1≤600. As a result, it helps to improve the capacity retention rate of the secondary battery while reducing the gas production of the secondary battery.

In any embodiment of the present application, 0<10A1+A2/5≤15, optionally, 2.6≤10A1+A2/5≤5. As a result, it helps to improve the capacity retention rate of the secondary battery while reducing the gas production of the secondary battery.

In any embodiment of the present application, the non-aqueous electrolyte further comprises a second lithium salt being lithium (fluorosulfonyl)imide salt, optionally the lithium (fluorosulfonyl)imide salt has a formula of LiN(SO₂R₁)(SO₂R₂), wherein R₁ and R₂ independently represent For CₙF₂ₙ₊₁, where n is an integer from 1 to 10, and the second lithium salt is present in an amount of A3% by mass, based on the total mass of the non-aqueous electrolyte, Optionally, 0<A3≤2.5, more optionally, 0.5≤A3≤2.0. As a result, the rate performance of the secondary battery can be improved while improving the safety performance of the secondary battery.

In any embodiment of the present application, optionally, 0.25≤A3/A1≤25, more optionally, 4≤A3/A1≤20. As a result, the cycle performance and storage performance of the secondary battery are not deteriorated, and meanwhile the internal resistance of the secondary battery can be further reduced and the rate performance of the secondary battery can be improved.

In any embodiment of the present application, A3/A2 is 0.5 or less, optionally 0.02 to 0.2. As a result, the non-aqueous electrolyte solution is not easy to hydrolyze, and can also have higher thermal stability, and at the same time, it contributes to the formation of an interphase film of lower impedance.

In any embodiment of the present application, the non-aqueous electrolyte further comprises fluoroethylene carbonate at a mass content of C1%, based on the total mass of the non-aqueous electrolyte. Optionally, 0<C1≤5, more optionally, 0.5≤C1≤3. As a result, the cycle performance of the secondary battery can be effectively improved.

In any embodiment of the present application, optionally, 5≤C1/A1≤50, more optionally, 10≤C1/A1≤30. As a result, it is beneficial to fully exert the further improvement effect of the fluoroethylene carbonate on the cycle performance of the secondary battery.

In any embodiment of the present application, the non-aqueous electrolyte further comprises a moisture scavenger comprising hexamethyldisilazane, tris(trimethylsilyl)phosphate or combination thereof, the moisture scavenger is present in an amount of C2% by mass, based on the total mass of the non-aqueous electrolyte; optionally, C2 is greater than 0 and less than or equal to 2, more optionally from 0.01 to 2. As a result, it can further improve the expansion of the secondary battery, and result in a secondary battery having both high group margin design and high safety performance.

In any embodiment of the present application, the non-aqueous electrolyte comprises an organic solvent, and the organic solvent comprises: a first solvent, comprising at least one of ethylene carbonate, propylene carbonate, butyl carbonate, vinylene carbonate, and vinyl ethylene carbonate, present in an amount of D1% by mass in the organic solvent, based on the total mass of the organic solvent; a second solvent, comprising at least one of methyl ethyl carbonate, diethyl carbonate, dimethyl carbonate, dipropyl carbonate, methyl propyl carbonate, and ethylene propyl carbonate, present in an amount of D2% by mass in the organic solvent, based on the total mass of the organic solvent; a third solvent, comprising at least one of methyl formate, methyl acetate, ethyl acetate, propyl acetate, methyl propionate, ethyl propionate, propyl propanoate, methyl butyrate, and ethyl butyrate, present in an amount of D3% by mass in the organic solvent, based on the total mass of the organic solvent, the organic solvent satisfies the following requirements: D1 is greater than 0 and less than or equal to 20, D2 is from 50 to 90, and D3 is from 0 to 30. Optionally, D1 is from 0.5 to 20, and more optionally, from 10 to 20.

In any embodiment of the present application, the electrode assembly comprises a positive electrode plate and a negative electrode plate, the capacity of the positive electrode plate is Q1 Ah, the capacity of the negative electrode plate is Q2 Ah, and the secondary battery satisfies: 1<Q2/Q1<1.05 and A1<B. As a result, the secondary battery can have high energy density, high safety performance and good kinetic performance.

In any embodiment of the present application, at least one of X and Y represents a fluorine atom, and optionally, both X and Y represent a fluorine atom. The presence of fluorine atoms helps to form a thinner positive electrode interphase film and/or negative electrode interphase film, which contributes to the uniform transport of lithium ions and can effectively inhibit the formation of lithium dendrites.

In any embodiment of the present application, the compound represented by formula I comprises at least one of the following compounds:

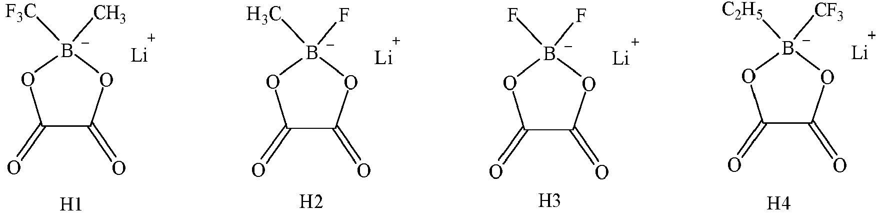

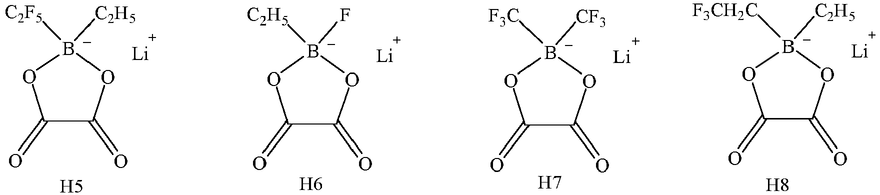

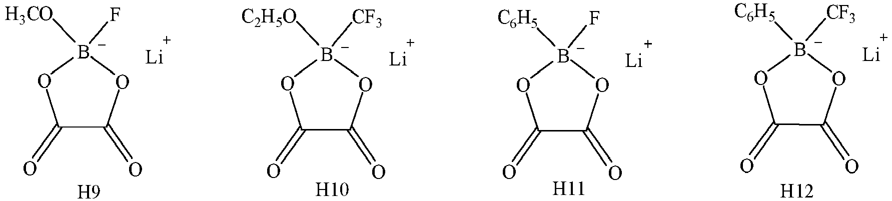

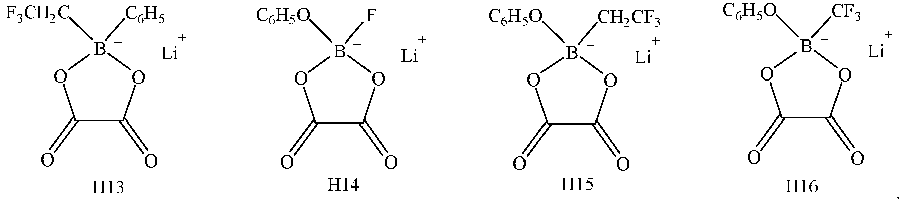

In any embodiment of the present application, the battery housing is made of at least one of hard plastic casing, aluminum, and stainless steel.

A second aspect of the present application provides a battery module, including the lithium-ion secondary battery of the first aspect of the present application.

A third aspect of the present application provides a battery pack, including the secondary battery of the first aspect of the present application or the battery module of the second aspect of the present application.

A fourth aspect of the present application provides an electrical device, including at least one of the lithium-ion secondary battery of the first aspect of the present application, the battery module of the second aspect of the present application, or the battery pack of the third aspect of the present application.

The battery module, battery pack and electrical device of the present application include the secondary battery provided by the present application, and thus have at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on these drawings without creative work.
Fig. 1 is a schematic diagram of an embodiment of a secondary battery of the present application.
Fig. 2 is an exploded schematic diagram of the embodiment of the secondary battery as shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded schematic diagram of the embodiment of the battery pack as shown in Fig. 4.
Fig. 6 is a schematic diagram of an embodiment of an electrical device of the present application as a powder supply.

In the drawings, the drawings are not necessarily drawn to scale. The reference numerals are defined as follows: 1- battery pack; 2- upper case body; 3-lower case body; 4-battery module; 5-secondary battery; 51-battery housing; 52-electrode assembly; and 53- cover.

### DETAILED DESCRIPTION

Hereafter, embodiments of the secondary battery, a battery module, a battery pack and an electrical device of the present application will be specifically described in detail with appropriate references to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following description are provided for those skilled in the art to fully understand the present application, and are not intended to limit the subject matter described in the claims.

A "range" disclosed herein is defined in terms of lower and upper limits, and a given range is defined by selecting a lower limit and an upper limit that define the boundaries of the particular range. Ranges defined in this manner may be inclusive or exclusive of end values and may be combined arbitrarily, that is, any lower limit may be combined with any upper limit to form a range. For example, if ranges of 60-120 and 80-110 are listed for a particular parameter, it is to be understood that ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such a technical solution should be considered to be included in the disclosure of the present application.

Unless stated otherwise, all technical features and optional technical features of the present application can be combined with each other to form a new technical solution, and such a technical solutions should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprising" and "including" mentioned in the present application means that it is drafted in an open mode or in a close mode. For example, the transition phases "comprising" and "including" may mean that other components not listed may also be included or contained, or only the listed components may be included or contained.

In the present application herein, unless otherwise stated, the term "or" is inclusive. For example, the phrase "A or B" means "A, B, or both A and B." More specifically, any of the following conditions satisfy the condition "A or B": A is true (or exists) and B is false (or does not exist); A is false (or does not exist) and B is true (or exists); or both A and B are true (or exist).

Throughout this specification, substituents of compounds are disclosed in groups or ranges. It is expressly anticipated that such description includes each individual subset of members of these groups and ranges. For example, it is expressly anticipated that the term "C1-C6 alkyl" is separately disclosed for C1, C2, C3, C4, C5, C6, C1-C6, C1-C5, C1-C4, C1-C3, C1-C2, C2-C6, C2-C5, C2-C4, C2-C3, C3-C6, C3-C6, C3- C5, C3-C4, C4-C6, C4-C5, and C5-C6 alkyl groups.

In this application, the term "group margin" refers to the ratio of the actual internal cross-sectional area to the maximum internal cross-sectional area of the secondary battery, that is, the filling rate. There are two ways to calculate the group margin, (1) group margin = overall cross-sectional area of the electrode assembly / internal space[BI1] area of the battery case; (2) group margin = thickness of the electrode assembly / internal thickness of a battery housing.

In this application, the terms "plurality" and "multiple" and "several" refer to two or more.

A secondary battery usually has an electrode assembly, a non-aqueous electrolyte and an outer package that is used for packaging the electrode assembly and the non-aqueous electrolyte.

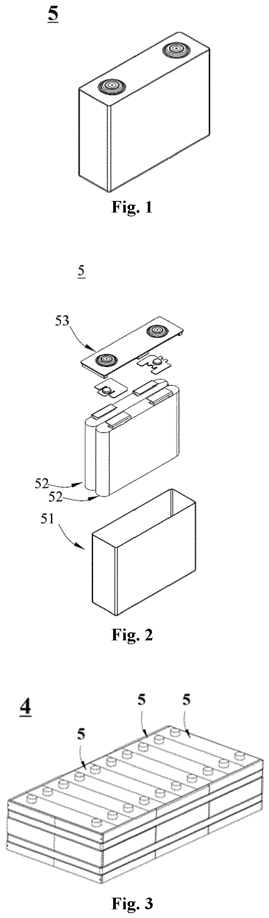

Fig. 1 shows a secondary battery 5 with a square structure as an example of the present application. In some embodiments, referring to Fig. 2, the outer package may include a housing 51 and a cover plate 53. The housing 51 may include a bottom plate and side plates connected to the bottom plate, and the bottom plate and the side plate are combined to form an accommodating cavity. The housing 51 has an opening communicating with the accommodating cavity, and the cover plate 53 can cover the opening to close the accommodating cavity.

At present, a generally adopted technical solution to increase energy density of a secondary battery is to design a secondary battery having an increased group margin. The group margin can reflect the difficulty of the electrode assembly entering the housing, the pressure on the battery housing after charging and expansion of the electrode assembly, and the energy density of the secondary battery. The smaller the group margin of the secondary battery, the easier it is for the electrode assembly to enter into the housing, but the lower the energy density of the resulting secondary battery is, which may not be able to meet actual usage requirements. The larger the group margin of the secondary battery, the higher the energy density, but the more difficult it is for the electrode components to enter the housing, which not only increases the process difficulty but also causes damage to the electrode assembly. In addition, the larger the group margin of the secondary battery, the smaller the residual space inside the battery housing. As a result, there may not be enough space to accommodate the gas generated during the processes of formation, charging and discharging, and storage processes, which further results in the continuously increased pressure on the battery housing after the expansion of electrode assembly, thereby seriously deteriorating the safety performance of the secondary battery.

Therefore, the design of high group margin is not compatible to high safety performance in the current secondary battery before the present application.

The inventors of the present application have found in the research that by adopting a suitable non-aqueous electrolyte, the gas generated during the processes of formation, charge and discharge, and storage can be significantly reduced, thereby reducing the pressure on the battery housing and obtaining a secondary battery that can have both the design of high group margin and high safety performance.

In particular, the secondary battery of the present application comprises a battery housing, an electrode assembly contained in the battery housing and a non-aqueous electrolyte, wherein the non-aqueous electrolyte represent H atom, a halogen atom, C1-C20 alkyl group, C2-C20 alkenyl group, C2-C20 alkynyl group, C6-C20 aryl group, C1-C20 haloalkyl group, C2-C20 haloalkenyl group, C2-C20 haloalkyne group, C6-C20 haloaryl group, C1-C20 alkoxy group, C2-C20 alkenoxy group, C2-C20 alkynloxy group, C6-C20 aryloxy group, C1-C20 haloalkoxy group, C2-C20 haloalkenoxy group, C2-C20 haloalkynloxy group, C6-C20 haloaryloxy group or a combination thereof, and at least one of X and Y represents a fluorine atom or a group containing fluorine atom.

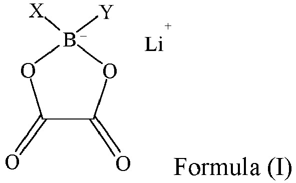

Based on the total mass of the non-aqueous electrolyte, the compound represented by Formula I is present in an amount of A1% by mass; the secondary battery has a group margin B and the secondary battery satisfies: B is from 0.88 to 0.99, B/A1 is from 0.5 to 45.

The secondary battery of the present application may be a lithium secondary battery, specifically, a lithium ion secondary battery.

The electrode assembly usually has a positive electrode plate, a negative electrode plate and a separator that is arranged between the positive electrode plate and the negative electrode plate and is mainly used to prevent the short circuit between the positive electrode and the negative electrode and at the same time allows lithium ions to pass through. The positive electrode plate, the negative electrode plate, and the separator may be stacked and/or wounded into an electrode assembly. The electrode assembly is packaged in the accommodating cavity formed by the combination of the bottom plate of the battery housing and the side plates connected to the bottom plate, and the non-aqueous electrolyte is infiltrated in the electrode assembly. The number of electrode assemblies included in the secondary battery may be one or multiple, which may be adjusted according to requirements. In the present application, the battery housing and the cover are made of at least one of hard plastic casing, aluminum, and stainless steel.

Non-aqueous electrolyte is one of the key factors affecting the performance of secondary batteries, and includes organic solvents and lithium salts dissolved therein. Non-aqueous electrolyte is easily involved in a series of oxidation and reduction reactions during the processes of formation, charge, discharge, and storage, and decomposes to produce a large amount of gas.

During the formation of the secondary battery (i.e., the first charge), a series of oxidation and reduction reactions occur on the surface of the negative electrode active material in the non-aqueous electrolyte to form a solid electrolyte interphase (SEI) film accompanied by gas generation.

During the long-term charge-discharge cycle of the secondary battery, the bound water in the electrode plates will gradually be released and enter the non-aqueous electrolyte. After the moisture content in the non-aqueous electrolyte increases, a series of internal side reactions will occur, causing the expansion of the battery. At present, the most widely used commercial non-aqueous electrolyte system is the mixed carbonate solution of lithium hexafluorophosphate which has poor thermal stability in high temperature environment, and it will decompose to form PF₅ at higher temperature. PF₅ has a strong Lewis acidity, and will interact with the lone pair of electrons on the oxygen atom in the organic solvent molecule to decompose the organic solvent, causing the expansion of the battery; in addition, PF₅ is highly sensitive to moisture, and will generate HF when it encounters water. HF will not only induce the decomposition of organic solvents, but also increase the acidity of the non-aqueous electrolyte, which will easily corrode the positive electrode active material and the positive electrode current collector, resulting in the loss of the positive electrode active material and the dissolution of transition metal ions. After the dissolution of the transition metal ions in the positive electrode active material and migrating to the negative electrode, the transition metal ions will be reduced to transition metals, and the transition metal produced in this way is equivalent to a "catalyst", which will catalyze the decomposition of the interphase film on the surface of the negative electrode active material, further increase the expansion of the battery, and affect the safety performance of the secondary battery; in addition, to replenish the lost interphase film, the non-aqueous electrolyte is continuously consumed and continues to occur a series of oxidation and reduction reactions, thus further increasing the expansion of the battery, and during such process, the active lithium ions inside the battery are also continuously consumed, which in turn has an irreversible impact on the capacity retention of the secondary battery.

During the storage process of secondary batteries, the positive electrode active material is often in a metastable state and is extremely unstable, which will cause decomposition reactions and result in expansion. In addition, when the stability of the interphase film on the surface of the negative electrode active material is relatively low, the part of its surface in contact with the non-aqueous electrolyte will dissolve as the temperature increases, for example, the organic components (CH₂OCO₂Li)₂ is very unstable, prone to decomposition reactions, resulting in gas generation and causing the expansion of the battery.

The inventors of the present application have found in the research that, when the non-aqueous electrolyte comprises a compound represented by Formula I and its content A1% and the group margin B of the secondary battery satisfy the B/A1 of from 0.5 to 45, the gas generated during the processes such as formation, charging, discharging, and storage can be reduced.

Although the mechanism is not clear, possible reasons are speculated, including the following points.

First, the compound represented by Formula I can form a uniform, dense and stable interphase film on the surface of the positive electrode active material, which reduces the direct contact between the positive electrode active material and the non-aqueous electrolyte, reduces interfacial side reactions, and reduces the dissolution of transition metal ions, thereby reducing a series of side reactions caused by the interfacial side reactions and dissolution of transition metal ions and thereby reducing expansion of battery.

Second, the B atom in the compound structure represented by Formula I is easy to combine with the O atom in the positive electrode active material, thereby stabilizing the crystal structure of the positive electrode active material, reducing the formation of lattice defects such as oxygen vacancies and irreversible interlayer migration, and reducing the crystal structure. At the same time, it can also reduce the charge transfer resistance of the positive electrode active material and reduce the diffusion resistance of lithium ions in the bulk phase of the positive electrode active material, so that the lithium ions in the bulk phase of the positive electrode active material can be replenished to the surface in time to avoid over-extraction of lithium. As a result, the crystal structure of the positive electrode active material is more stable, the lattice oxygen is not easy to precipitate, and the transition metal ion is not easy to come out, thereby reducing a series of side reactions caused by them and reducing expansion of battery.

Third, the B-O bond energy in the compound structure represented by Formula I can bind Al³⁺ and form a passivation film on the surface of the aluminum foil current collector, which can effectively improve the corrosion resistance of the aluminum foil current collector against HF.

Fourth, the compound represented by Formula I can also form a uniform, dense and stable interfacial film on the surface of the negative electrode active material, thus reducing the damage and regeneration of the negative electrode interphase film, thereby reducing the generation of gas and the consumption of active lithium ion in the process, reducing expansion of battery and improving battery capacity retention.

Thus, when the non-aqueous electrolyte comprises a compound represented by Formula I and its content A1% and the group margin B of the secondary battery satisfy the B/A1 of from 0.5 to 45, on the one hand, the compound represented by Formula I can form a uniform, dense and stable interphase film at both the positive electrode and the negative electrode simultaneously, which reduces the direct contact between the active material (positive electrode active material and negative electrode active material) and the non-aqueous electrolyte and reduces the damage and regeneration of positive electrode interphase film and negative electrode interphase film, thereby reducing the generation of gas and the consumption of active lithium ions in the process and reducing battery expansion and improving the capacity retention rate of the battery; on the other hand, the compound represented by Formula I can also stabilize the crystal structure of positive electrode active material, reduce the precipitation of lattice oxygen and the dissolution of transition metal ion, thereby reducing a series of side reactions caused by the precipitation of lattice oxygen and the dissolution of transition metal ion and thereby reducing battery expansion. As a result, the secondary battery of this application can have both high group margin design and high safety performance, and meanwhile have good cycle performance and kinetic performance.

In the present application, when the content A1% of the compound represented by Formula I and the group margin B of the secondary battery satisfy B/A1 of from 0.5 to 45, the compound represented by Formula I can fully exert the effect of reducing gas generation and improving capacity retention rate. When B/A1 is greater than 45, the content of the compound represented by Formula I is relatively low and the group margin design of the secondary battery group is relatively large, however there is not enough compound represented by Formula I to form a uniform, dense and stable positive electrode interphase film and/or negative electrode interphase film. As a result, the crystal structure of the positive electrode active material cannot be effectively stabilized and the decomposition of the non-aqueous electrolyte cannot be effectively reduced, so more gas is generated in the secondary battery and the battery casing is under greater pressure and the secondary battery has a relatively high safety risk. When B/A1 is less than 0.5, the group margin design of the secondary battery is relatively small, so high energy density cannot be obtained; or the content of the compound represented by Formula I is relatively high, forming an overly thick positive electrode interphase film and/or negative electrode interphase film, leading to higher interface impedance of positive electrode and/or negative electrode. In addition, the structure of the compound represented by Formula I contains an oxalate group, thus it will also generate gas when it decomposes, which will increase the expansion of the battery. Optionally, in some embodiments, B/A1 is from 1 to 45, from 1 to 30, from 1 to 20, from 1 to 18, from 1 to 16, from 1 to 14, from 1 to 12, from 1 to 10, from 4 to 45, from 4 to 30, from 4 to 20, from 4 to 18, from 4 to 16, from 4 to 14, from 4 to 12, from 4 to 10, from 10 to 45, from 10 to 30, from 10 to 20, from 10 to 18 or from 10 to 16.

In the present application, the group margin B of the secondary battery satisfies that B is from 0.88 to 0.99. Optionally, in some embodiments, B is from 0.90 to 0.99, from 0.90 to 0.98, from 0.90 to 0.97, from 0.90 to 0.96, from 0.90 to 0.95, from 0.92 to 0.99, from 0.92 to 0.98, from 0.92 to 0.97, from 0.92 to 0.96, or from 0.92 to 0.95. As a result, the secondary battery can be provided with higher energy density without affecting the safety performance of the secondary battery.

In this application, at least one of X and Y represents a fluorine atom or a group containing fluorine atoms, for example, at least one of the group consisting of partially fluorinated or fully fluorinated groups: C1-C20 alkyl, C2-C20 alkenyl, C2-C20 alkynyl, C6-C20 aryl, C1-C20 alkoxy, C2-C20 alkenyloxy, C2-C20 alkynyloxy, and C6-C20 aryloxy. The presence of fluorine atoms helps to form a thinner positive electrode interphase film and/or negative electrode interphase film, which contributes to the uniform transport of lithium ions and can effectively inhibit the formation of lithium dendrites. In some embodiments, at least one of X and Y represents a fluorine atom. Optionally, both X and Y represent fluorine atoms.

As an example, the compound represented by Formula I comprises at least one of the following compounds:

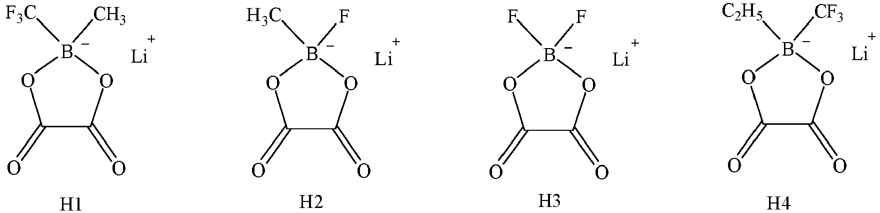

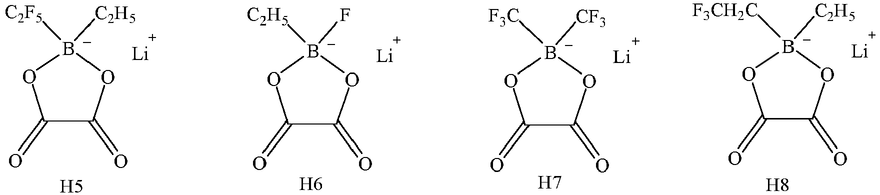

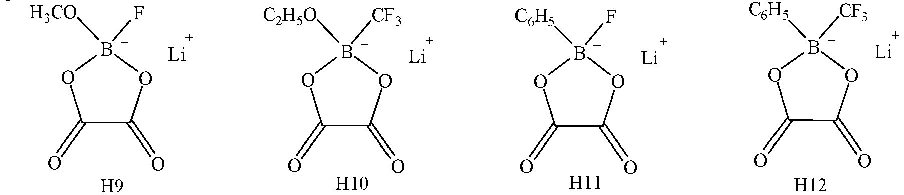

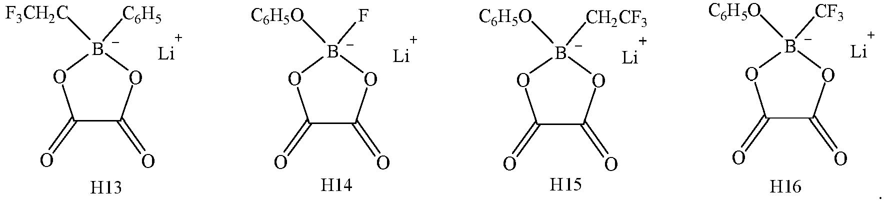

In some embodiments, the content A1% of the compound represented by Formula I satisfies that A1 is greater than or equals to 0.02 and less than 2. Optionally, A1 is from 0.02 to 1.8, from 0.02 to 1.6, from 0.02 to 1.4, from 0.02 to 1.2, from 0.02 to 1, from 0.02 to 0.8, from 0.02 to 0.6, from 0.02 to 0.4, from 0.02 to 0.3, from 0.02 to 0.2, from 0.02 to 0.1, from 0.05 to 1.8, from 0.05 to 1.6, from 0.05 to 1.4, from 0.05 to 1.2, from 0.05 to 1, from 0.05 to 0.8, from 0.05 to 0.6, from 0.05 to 0.4, from 0.05 to 0.3, from 0.05 to 0.2 or from 0.05 to 0.1. By using the content of the compound represented by Formula I in the appropriate ranges, it helps to better reduce gas generation and active lithium ion consumption, thereby reducing battery expansion and improving capacity retention. In addition, the following situation can be effectively avoided: When the content of the compound represented by Formula I is relatively low, there is not enough compound represented by Formula I to form a uniform, dense and stable positive electrode interphase film and/or negative electrode interphase film. As a result, the crystal structure of the positive electrode active material cannot be effectively stabilized and the decomposition of the non-aqueous electrolyte cannot be effectively reduced, so more gas is generated in the secondary battery and the battery housing is under greater pressure and the secondary battery has a relatively high safety risk. When the content of the compound represented by Formula I is relatively high, the interfacial impedance of the positive electrode and/or negative electrode will increase, and at the same time, since the structure of the compound represented by Formula I contains an oxalate group which will also generate gas when it decomposes and thus will increase the expansion of the battery instead.

In some embodiments, the content A1% of the compound represented by Formula I and group margin B of secondary battery satisfies A1<B. When the content of the compound represented by Formula I is relatively high, the interface impedance of positive electrode and/or negative electrode increase, which affects the kinetic performance of the secondary battery. So when the secondary battery satisfies A1<B, the secondary battery can have high group margin design, high safety performance and good kinetic performance.

In some embodiments, the capacity of the positive electrode plate is Q1 Ah, the capacity of the negative electrode plate is Q2 Ah, and the secondary battery satisfies: 1 <Q2/Q 1 <1.05 and A1<B. The capacity of the negative electrode plate is greater than the capacity of the positive electrode plate, which can ensure that the negative electrode plate has enough vacancies to accommodate lithium ions from the positive electrode plate and prevent the lithium precipitation in the negative electrode plate; at the same time, the ratio Q2/Q1 of the capacity of the negative electrode plate to the capacity of the positive electrode plate is less than 1.05, which is conducive to further improving the energy density of the secondary battery. As a result, when the secondary battery satisfies: 1<Q2/Q1<1.05 and A1<B, the secondary battery can have high energy density, high safety performance and good kinetic performance.

In this application, the capacity of the positive electrode plate and the capacity of the negative electrode plate have well-known meanings in the art, and can be measured with well-known instruments and methods in the art. For example, a blue electric tester may be used for testing.

As an example, the capacity of positive electrode plate may be tested by using the following method including: punch a cold-pressed positive electrode plate into a small disc having an area of S₀, assembling into a button battery in a glove box, charging at a constant current of 0.1 mA to the charge cut-off voltage, and discharging at a constant current of 0.1 mA to the discharge cut-off voltage to obtain the discharge capacity CAP1, then the capacity of positive electrode plate can be obtained by the formula CAP1×S₁/S₀, in which S₀ is the area of the small disc, S₁ is the coated area of the positive electrode film layer in the positive electrode plate.

As an example, the capacity of the negative electrode may be tested by using the following method including: punch a cold-pressed negative electrode plate into a small disc having an area of S₀, assembling into a button battery in a glove box, discharging to the discharge cut-off voltage with a constant current of 0.1 mA, charging to the cut-off voltage of charge with a constant current of 0.1 mA to obtain the charging capacity CAP2, then the capacity of the negative electrode plate can be obtained by the formula CAP2×S₂/S₀, in which S₀ is the area of the small disc, S₂ is the coating area of the negative electrode film layer in the negative electrode plate.

### [Lithium salt]

In some embodiments, the non-aqueous electrolyte includes a first lithium salt, and the first lithium salt is lithium hexafluorophosphate. The first lithium salt is present in an amount of A2% by mass of greater than 0 and less than or equal to 14, based on the total mass of the non-aqueous electrolyte. Optionally, A2 is from 4 to 14, from 4 to 12, from 4 to 10, from 6 to 14, from 6 to 12, from 6 to 10, from 8 to 14, from 8 to 12 or from 8 to 10. Lithium hexafluorophosphate has the property of high ionic conductivity, whereby when its content is in a suitable range, it helps to improve the overall ionic conductivity of the non-aqueous electrolyte, accelerate lithium ion transport and improve the capacity retention of the secondary battery. However, lithium hexafluorophosphate has poor thermal stability in high temperature environment, and it will decompose to form PF₅ at higher temperature. PF₅ reacts with water to form HF, which easily corrodes the positive electrode active material and increases the expansion of the battery. When the non-aqueous electrolyte contains both the compound shown in Formula I and lithium hexafluorophosphate, the compound shown in Formula I can react with lithium hexafluorophosphate to form the compound LiPF₄C_{2O4}, thereby reducing the decomposition of lithium hexafluorophosphate and the formation of HF, and thus the secondary battery can have good cycle performance and meanwhile have high safety performance and high energy density.

In some embodiments, the content A1% of the compound shown in Formula I and the content A2% of the first lithium salt satisfy 10≤A2/A1≤600. When the content A1% of the compound shown in Formula I is properly matched with the content A2% of the first lithium salt, it helps to improve the capacity retention rate of the secondary battery while reducing the gas production of the secondary battery. In addition, the following situation can be effectively avoided: When the content of the first lithium salt is relatively high and the content of the compound represented by Formula I is relatively low, there may be more HF in the non-aqueous electrolyte, resulting in more decomposition reactions of the non-aqueous electrolyte; At the same time, the interphase film formed by the compound shown in Formula I on the positive electrode and/or the negative electrode is not uniform and compact enough to prevent the corrosion of the positive electrode active material against HF and a series of side reactions caused thereby, and then the secondary battery may produce more gas; When the content of the first lithium salt is relatively low and the content of the compound shown in Formula I is relatively high, the compound shown in Formula I is not easy to completely dissociate in the non-aqueous electrolyte due to its small anion radius, and anions and cations are easy to associate, thereby decreasing the ionic conductivity of the non-aqueous electrolyte, and probably deteriorating the capacity retention rate of the secondary battery. Optionally, 15≤A2/A1≤600, 20≤A2/A1≤600, 40≤A2/A1≤600, 60≤A2/A1≤600, 80≤A2/A1≤600, 100≤A2/A1≤600, 120≤A2/A1≤600, 150≤A2/A1≤600, 10≤A2/A1≤300, 20≤A2/A1≤300, 40≤A2/A1≤300, 60≤A2/A1≤300, 80≤A2/A1≤300, 100≤A2/A1≤300, 120≤A2/A1≤300 or 150≤A2/A1≤300.

In some embodiments, the content A1% of the compound shown in Formula I and the content A2% of the first lithium salt satisfy 0<10A1+A2/5≤15. When the content A1% of the compound shown in Formula I is properly matched with the content A2% of the first lithium salt, it helps to improve the capacity retention rate of the secondary battery while reducing the gas production of the secondary battery. In addition, the following situation can be effectively avoided: When the contents of both the first lithium salt and lithium hexafluorophosphate are relatively high, there may be more HF in the non-aqueous electrolyte, resulting in deteriorated crystal structure stability of the positive electrode active material and more decomposition reactions of the non-aqueous electrolyte, thus more gas generation and increased safety risk; At the same time, the compound shown in Formula I is not easy to completely dissociate in the non-aqueous electrolyte due to its small anion radius, and anions and cations are easy to associate, so the relatively high contents result in the decreased ionic conductivity of the non-aqueous electrolyte, and the deteriorated capacity retention rate of the secondary battery. Optionally, 2.6≤10A1+A2/5≤15, 2.6≤10A1+A2/5≤12, 2.6≤10A1+A2/5≤10, 2.6≤10A1+A2/5≤8, 2.6≤10A1+A2/5≤7, 2.6≤10A1+A2/5≤6, 2.6≤10A1+A2/5≤5 or 2.6≤10A1+A2/5≤4.

In some embodiments, optionally, the content A1% of the compound shown in Formula I and the content A2% of the first lithium salt satisfy 10≤A2/A1≤600 and 0<10A1+A2/5≤15 at the same time. As a result, by using the non-aqueous electrolyte containing an appropriate amount of the compound shown in Formula I and the first lithium salt, the secondary battery can simultaneously have high group margin design, high safety performance and good cycle performance. More optionally, the content A1% of the compound shown in Formula I and the content A2% of the first lithium salt satisfy 60≤A2/A1≤600 and 2.6≤10A1+A2/5≤5 at the same time.

In some embodiments, the non-aqueous electrolyte further includes a second lithium salt, and the second lithium salt is lithium (fluorosulfonyl)imide salt. Optionally the lithium (fluorosulfonyl)imide salt has a formula of LiN(SO₂R₁)(SO₂R₂), wherein R₁ and R₂ independently represent F or CₙF₂ₙ₊₁, where n is an integer from 1 to 10. As an example, the lithium (fluorosulfonyl)imide salt includes lithium bisfluorosulfonyl imide (LiFSI), lithium bistrifluoromethanesulfonyl imide (LiTFSI) or a combination thereof. Optionally, the lithium (fluorosulfonyl)imide salt includes lithium bisfluorosulfonyl imide (LiFSI).

Optionally, in some embodiments, the second lithium salt is present in an amount of A3% by mass of 0≤A3≤2.5, based on the total mass of the non-aqueous electrolyte, For example, A3 is 0, 0.10, 0.20, 0.50, 0.75, 1.0, 1.25, 1.50, 1.75, 2.0, 2.25, 2.50 or any of the ranges formed by the above values. More optionally, 0<A3≤2.5, 0<A3≤2.25, 0<A3≤2.0, 0<A3≤1.75, 0<A3≤1.50, 0<A3≤1.25, 0<A3≤1.0, 0.5≤A3 ≤2.5, 0.5≤A3≤2.25, 0.5≤A3≤2.0, 0.5≤A3≤1.75, 0.5≤A3≤1.50, 0.5≤A3≤1.25 or 0.5≤A3≤1.0.

The (fluorosulfonyl)imide anion is a weakly coordinated anion centered on N and containing a conjugated group and a strong charge-absorbing -F or -CₙF₂ₙ₊₁, the anion charge is highly delocalized, and the force between the anion and the lithium ion is weakened, so lithium (fluorosulfonyl)imide salt has relatively low lattice energy and is easy to dissociate, thereby increasing the ionic conductivity of the non-aqueous electrolyte, reducing the viscosity of the non-aqueous electrolyte, and improving the rate performance of the secondary battery. At the same time, lithium (fluorosulfonyl)imide salt also has the characteristics of high thermal stability, wider electrochemical window and not being easily hydrolyzed, and can be used for the formation of a LiF-rich interphase film on negative active material surface, the LiF-rich interphase film is thinner, has lower impedance and higher thermal stability, thereby reducing the side reaction between the negative electrode active material and the non-aqueous electrolyte, reducing the expansion of battery and inhibiting the formation of lithium dendrites. As a result, when the non-aqueous electrolyte solution contains lithium (fluorosulfonyl)imide salt, the rate performance of the secondary battery can be improved while improving the safety performance of the secondary battery.

In some embodiments, the content A1% of the compound shown in Formula I and the content A3% of the second lithium salt satisfy 0.25≤A3/A1≤25. Optionally, 1≤A3/A1≤25, 1≤A3/A1≤20, 1≤A3/A1≤15, 1≤A3/A1≤12.5, 1≤A3/A1≤10, 1≤A3/A1≤7.5, 2≤A3/A1≤25, 2≤A3/A1≤20, 2≤A3/A1≤15, 2≤A3/A1≤12.5, 2≤A3/A1≤10, 2≤A3/A1≤7.5, 4≤A3/A1≤25, 4≤A3/A1≤20, 4≤A3/A1≤15, 4≤A3/A1≤12.5 or 4≤A3/A1≤10.

When the non-aqueous electrolyte contains lithium (fluorosulfonyl)imide salt, the rate performance of the secondary battery can be improved, but the lithium (fluorosulfonyl)imide salt is not resistant to high voltage and will corrode the positive electrode current collector at a higher potential (For example, aluminum foil), and its film-forming effect on the surface of the positive electrode active material is poor, which easily affects the cycle performance of the secondary battery. The compound shown in Formula I is used as a stabilizer for positive electrode active materials, which can form an interphase film with excellent performance on the surface of positive electrode active materials, reduce side reactions between positive electrode active material and non-aqueous electrolyte and stabilize the crystal structure of positive electrode active material. Therefore, the combined use of the compound represented by Formula I and the lithium (fluorosulfonyl)imide salt is beneficial to fully exert the improvement effect of the lithium (fluorosulfonyl)imide salt on the rate performance of the secondary battery. In addition, by reasonably controlling the relationship between the content A1% of the compound shown in Formula I and the content A3% of the second lithium salt so that it satisfies 0.25≤A3/A1≤25, the synergistic effect between the compound shown in Formula I and lithium (fluorosulfonyl)imide salt can be fully exerted, which will not only not deteriorate the cycle performance and storage performance of the secondary battery, but also further reduce the internal resistance of the secondary battery and improve the rate performance of the secondary battery.

In some embodiments, the non-aqueous electrolyte includes a first lithium salt and the second lithium salt at the same time. Optionally, the content A2% of the first lithium salt and the content A3% of the second lithium salt satisfy A3/A2 of 0.5 or lower, more preferably from 0.005 to 0.5, from 0.005 to 0.4, from 0.005 to 0.3, from 0.005 to 0.2, from 0.02 to 0.5, from 0.02 to 0.4, from 0.04 to 0.3, from 0.02 to 0.2, from 0.04 to 0.5, from 0.04 to 0.4, from 0.04 to 0.3 or from 0.04 to 0.2. As a result, the non-aqueous electrolyte solution is not easy to hydrolyze, and can also have higher thermal stability, and at the same time, it contributes to the formation of an interphase film of lower impedance.

In some embodiments, the non-aqueous electrolyte may also include a third lithium salt, including at least one of lithium tetrafluoroborate (LiBF₄), lithium perchlorate (LiClO₄), lithium hexafluoroarsenate (LiAsF₆), lithium difluorophosphate (LiPO₂F₂), lithium difluorooxalate phosphate (LiDFOP) and lithium tetrafluorooxalate phosphate (LiTFOP). The third lithium salt can be used as an auxiliary lithium salt to further improve the interface performance of the positive electrode and/or the negative electrode, or to improve the ionic conductivity or thermal stability of the non-aqueous electrolyte. Optionally, the third lithium salt is present in an amount of A4% by mass of 6 or lower and more optionally 2 or lower, based on the total mass of the non-aqueous electrolyte.

In some embodiments, A1+A2+A3+A4 is from 10 to 20, optionally from 10 to 15.

### [Organic solvent]

In some embodiments, the organic solvent comprises at least one of the first solvent, the second solvent, and the third solvent.

The first solvent is a cyclic carbonate compound, for example, it may comprise at least one of ethylene carbonate (EC), propylene carbonate (PC), butylene carbonate (BC), vinylene carbonate (VC) and ethylene carbonate (VEC).

The second solvent is a chain carbonate compound, for example, it may comprise at least one of methyl ethyl carbonate (EMC), diethyl carbonate (DEC), dimethyl carbonate (DMC), dipropyl carbonate (DPC), methyl propyl carbonate (MPC), and ethylene propyl carbonate (EPC).

In some embodiments, optionally, the organic solvent comprises at least one of the first solvent and the second solvent. When the content of lithium salt such as lithium hexafluorophosphate is relatively high, the viscosity of the non-aqueous electrolyte increases and the ion conductivity decreases, which is not conducive to the transmission of lithium ions. The first solvent can increase the ionic conductivity of the non-aqueous electrolyte due to its high dielectric constant, and the second solvent can reduce the viscosity of the non-aqueous electrolyte due to its low viscosity. As a result, when the organic solvent comprises the first solvent and the second solvent at the same time, it helps to make the non-aqueous electrolyte have proper viscosity and ion conductivity, thereby facilitating the transmission of lithium ions.

In some embodiments, the organic solvent may further comprise the third solvent. The third solvent is a carboxylate ester compound, for example, it may comprise at least one of methyl formate (MF), methyl acetate (MA), ethyl acetate (EA), propyl acetate (PA), methyl propionate (MP), ethyl propionate (EP), propyl propanoate (PP), methyl butyrate (MB), and ethyl butyrate (EB). The third solvent has the advantages of low viscosity and high dielectric constant, and its application in non-aqueous electrolyte will help the non-aqueous electrolyte have suitable viscosity and ionic conductivity, which is further beneficial to the transmission of lithium ions and improves the rate performance of the secondary battery.

The first solvent can increase the ionic conductivity of the non-aqueous electrolyte, but it is prone to decomposition, which affects the safety performance of the secondary battery. Therefore, its content needs to be controlled within an appropriate range. In some embodiments, the first solvent is present in an amount of D1% by mass of greater than 0 and less than or equal to to 20, based on the total mass of the organic solvents. Optionally, D1 is from 0.5 to 20, from 5 to 20, from 10 to 20, from 12 to 20, or from 15 to 20.

In some embodiments, the second solvent is present in an amount of D2% by mass of from 50 to 90, based on the total mass of the organic solvents. Optionally, D2 is from 55 to 90, from 60 to 90, from 65 to 90 or from 70 to 90.

The third solvent can improve the rate performance of the secondary battery, but it has relatively poor oxidation resistance and is easy to decompose when stored in a high state of charge, so its content should not be too high. In some embodiments, the third solvent is present in an amount of D3% by mass of from 0 to 30, based on the total mass of the organic solvents. Optionally, D3 is from 2 to 20, from 2 to 15, from 2 to 10, from 2 to 8, from 2 to 6, or from 2 to 5.

The organic solvent of the present application may contain additional solvents other than the above-mentioned first solvent, second solvent, and third solvent. As an example, the additional solvents may include sulfone solvents such as sulfolane (SF), methyl sulfonyl methane (MSM), ethyl methyl sulfone (EMS) and ethyl sulfonyl ethane (ESE).

### [Additives]

In some embodiments, the non-aqueous electrolyte may further comprise additives including, for example, at least one of halogen-substituted cyclic carbonate compounds, nitrile compounds, phosphonitrile compounds, aromatic hydrocarbons and halogenated aromatic hydrocarbon compounds, isocyanate compounds, acid anhydride compounds, sulfate compounds, sulfite compounds, sulfonate compounds, and disulfonate compounds. The present application is not particularly limited to the types of these additives, as long as they do not damage the gist of the present application. Optionally, the total mass content of these additives is 10% or less, more optionally 5% or less, based on the total mass of the non-aqueous electrolyte.

In some embodiments, the non-aqueous electrolyte may further comprise fluoroethylene carbonate (FEC) at a mass content of C1%, 0 ≤ C1 ≤ 5, based on the total mass of the non-aqueous electrolyte. For example, C1 is 0, 0.1, 0.5, 1, 1.5, 2, 2.5, 3, 3.5, 4, 4.5, 5 or any of the ranges formed by the above values. Optionally, 0<C1≤5, 0<C1≤4, 0<C1≤3, 0<C1≤2.5, 0<C1≤2, 0.5≤C1≤5, 0.5≤C1≤4, 0.5≤C1≤3, 0.5≤C1≤2.5 or 0.5≤C1≤ 2.

For secondary batteries, fluoroethylene carbonate can undergo reductive decomposition reactions at higher potentials, and form an interphase film with certain flexibility on the surface of negative electrode active material, and also inhibit the reductive decomposition of organic solvents at lower potentials as well as inhibit the embedding of organic solvents into the negative active material. Therefore, when the non-aqueous electrolyte contains fluoroethylene carbonate, the cycle performance of the secondary battery can be effectively improved. In addition, fluoroethylene carbonate is resistant to high-voltage oxidation, which is conducive to matching high-voltage positive electrode active material and thus is conducive to further improving the energy density of secondary batteries.

In some embodiments, the content A1% of the compound shown in Formula I and the content C1% of fluoroethylene carbonate satisfy 5≤C1/A1≤50. Optionally, 5≤C1/A1≤45, 5≤C1/A1≤40, 5≤C1/A1≤35, 5≤C1/A1≤30, 5≤C1/A1≤25, 5≤C1/A1≤20, 10≤C1/A1≤45, 10≤C1/A1≤40, 10≤C1/A1≤35, 10≤C1/A1≤30, 10≤C1/A1≤25, or 10≤C1/A1≤20.

When the non-aqueous electrolyte contains fluoroethylene carbonate, it can effectively improve the cycle performance of the secondary battery, but fluoroethylene carbonate is easy to decompose and forms HF, which will destroy the positive electrode interphase film, corrode the positive electrode active material, and increase gas production of the secondary battery. The compound shown in Formula I can be used as a stabilizer for positive electrode active material, and the B atom in its structure has the function of interacting with the O atom on the surface of the positive electrode active material, thereby being able to stabilize the crystal structure of the positive electrode active material and reduce the damage of HF to the crystal structure of the positive electrode active material. Therefore, the combined use of the compound represented by Formula I and fluoroethylene carbonate is beneficial to fully exerting the improvement effect of the fluoroethylene carbonate on the rate performance of the secondary battery. In addition, by reasonably controlling the relationship between the content A1% of the compound shown in Formula I and the content C1% of fluoroethylene carbonate so that it satisfies 5≤C1/A1≤50, the synergistic effect between the compound shown in Formula I and fluoroethylene carbonate can be fully exerted, which will not only not increse the gas production! of the secondary battery, but also further reduce improve the cycle performance of the secondary battery. At the same time, fluoroethylene carbonate has higher dielectric constant, and the relationship between the content A1% of the compound shown in Formula I and the content of C1% of fluoroethylene carbonate is reasonably controlled to satisfy 5≤C1/A1≤50, which can also help the anions of the compound shown in Formula I to form free ions, reduce the association of anions and cations, thereby increasing ion conductivity of the non-aqueous electrolyte and obtaining better cycle performance of the secondary battery.

In some embodiments, the non-aqueous electrolyte comprises a second lithium salt and fluoroethylene carbonate at the same time. Optionally, the secondary battery may further simultaneously satisfies 0.25≤A3/A1≤25 and 5≤C1/A1≤50. Further, the secondary battery also simultaneously satisfies 4≤A3/A1≤20 and 10≤C1/A1≤30. As a result, the cycle performance and rate performance of the secondary battery can be improved while improving the safety performance of the secondary battery. Fluoroethylene carbonate can effectively improve the cycle performance of the secondary battery; the second lithium salt can improve the rate performance of the secondary battery; the compound shown in Formula I is used as a stabilizer for positive electrode active materials, which can form an interphase film with excellent performance on the surface of positive electrode active materials and improve the lithium ion diffusion rate of the positive electrode active material, and meanwhile reduce side reactions between positive electrode active material and non-aqueous electrolyte and stabilize the crystal structure of positive electrode active material and reduce the precipitation of lattice oxygen and the dissolution of transition metal ions. Therefore, reasonably controlling the relationship between the content of fluoroethylene carbonate, the second lithium salt and the compound shown in Formula I is conducive to fully exerting the synergistic effect between the three, and fully suppressing the defects of each component used alone.

In some embodiments, the non-aqueous electrolyte may further comprise a moisture scavenger, which helps to reduce the water content of the non-aqueous electrolyte and reduce a series of side reactions caused by water, thereby further reducing the amount of gas produced by the secondary battery and enabling the secondary battery to have better balance of high group margin design and high safety performance.

Optionally, in some embodiments, the moisture scavenger includes hexamethyldisilazane (HMDS), tris(trimethylsilyl)phosphate (TMSP) or a combination thereof. In addition to effectively reducing the water content of the non-aqueous electrolyte, these two moisture scavengers can react with lithium hexafluorophosphate and form lithium difluorophosphate, which on the one hand reduces the decomposition of lithium hexafluorophosphate and the formation of HF, and on the other hand helps to further stabilize the positive electrode interphase film and/or negative electrode interphase film and reduce the positive electrode interface impedance and/or negative electrode interface impedance, thereby further improving the safety performance of the secondary battery and meanwhile further improving the cycle performance and rate performance of the secondary battery.

In some embodiments, the mass content of the moisture scavenger is present in an amount of C2% by mass, based on the total mass of the non-aqueous electrolyte, and C2 is greater than 0 and less than or equal to 2, optionally from 0.01 to 2, and more optionally from 0.1 to 1.

The electrolyte in the present application may be prepared according to conventional methods in the art. For example, the organic solvent(s), the lithium salt(s) and the like can be uniformly mixed to obtain a non-aqueous electrolyte. The order of addition of each material is not particularly limited; for example, the lithium salt and the like can be added to the organic solvent and mixed uniformly to obtain a non-aqueous electrolyte.

In the present application, the components of the non-aqueous electrolyte and the contents thereof can be determined according to methods known in the art. For example, they can be determined by gas chromatography-mass spectrometry (GC-MS), ion chromatography (IC), liquid chromatography (LC), nuclear magnetic resonance spectroscopy (NMR), etc.

It should be noted that, when testing the non-aqueous electrolyte of the present application, the non-aqueous electrolyte can be obtained from a secondary battery. An exemplary method for obtaining a non-aqueous electrolyte from a secondary battery includes the following steps: discharging the secondary battery to the discharge cut-off voltage (generally leaving the battery in a full discharge state for safety reasons) and then centrifuging it, after which an appropriate amount of the liquid obtained by centrifugation is the non-aqueous electrolyte. The non-aqueous electrolyte can also be obtained directly from the liquid injection port of the secondary battery.

### [Positive electrode plate]

In some embodiments, the positive electrode plate comprises a positive electrode current collector and a positive electrode film layer which is disposed on at least one surface of the positive electrode current collector and comprises a positive electrode active material. For example, the positive current collector has two opposite surfaces along the thickness direction of the positive current collector, and the positive electrode film layer is disposed on any one or both of the two opposite surfaces of the positive current collector.

The positive electrode film layer includes a positive electrode active material, and the positive electrode active material can be a positive electrode active material known in the art for secondary batteries. For example, the positive active material may comprise at least one of lithium transition metal oxides, lithium-containing phosphates with olivine structure, and respective modification compounds thereof. Examples of lithium transition metal oxides may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphates with olivine structure may include at least one of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and respective modified compounds thereof. The present application is not limited to these materials, but may use other conventionally known materials that can be used as positive active materials for secondary batteries. These positive electrode active materials may be used alone or in combination of two or more.

In some embodiments, the positive electrode active material comprises a layered material with a molecular formula of iₐNi_{b}Co_{c}Mn_{d}AlₑM_{f}O_{g}Aₕ, in which M represents a cation doped at transition metal site, A represents an anion doped at oxygen site, 0.8<a<1.2, 0≤b≤1, 0≤c≤1, 0≤d≤1, 0≤e≤ 1, 0≤f≤0.2, 0≤g≤2, 0≤h≤2, b+c+d+e+f=1, g+h=2.

The layered material with the molecular formula of LiₐNi_{b}Co_{c}Mn_{d}AlₑM_{f}O_{g}Aₕ can be optionally modified by M cation doping, modified by A anion doping, or modified by both M cation and A anion doping, and the crystal structure of the layered material obtained after doping is more stable, and the lattice oxygen is not easily precipitated and transition metal ions cannot easily escape, which can further reduce a series of side reactions caused by lattice oxygen and transition metal ions, thereby further improving the safety performance and electrochemical performance of the secondary battery, such as cycle performance and kinetic performance.

In some embodiments, M is selected from at least one of Si, Ti, Mo, V, Ge, Se, Zr, Nb, Ru, Pd, Sb, Ce, Te and W.

In some embodiments, A is selected from at least one of F, N, P and S. Optionally, A is selected from F. After modification by F doping, the crystal structure of LiₐNi_{b}Co_{c}Mn_{d}AlₑM_{f}O_{g}Aₕ is more stable, the lattice oxygen is not easily precipitated and the transition metal ions cannot easily escape, thereby enabling the secondary battery to have better safety performance, cycle performance and kinetic performance.

The values of a, b, c, d, e, f, g, and h satisfy the condition that LiₐNi_{b}Co_{c}Mn_{d}AlₑM_{f}O_{g}Aₕ remains electrically neutral.

In some embodiments, 0 < b < 0.98. Optionally, 0.50≤b<0.98, 0.55≤b<0.98, 0.60≤b<0.98, 0.65≤b<0.98, 0.70≤b<0.98, 0.75≤b<0.98 or 0.80≤b<0.98.

In some embodiments, c = 0.

In some embodiments, 0 < c ≤ 0.20. Optionally, 0<c≤0.15, 0<c≤0.10, 0<c≤0.09, 0<c≤0.08, 0<c≤0.07, 0<c≤0.06, 0<c≤0.05, 0<c≤ 0.04, 0<c≤0.03, 0<c≤0.02 or 0<c≤0.01. Cobalt has a small content in the earth's crust, is difficult to mine, and is expensive, thus low-cobalt or cobalt-free has become an inevitable development trend of positive electrode active materials. However, cobalt contributes greatly to the lithium ion diffusion rate of the positive electrode active material, and low cobalt or no cobalt will reduce the lithium ion diffusion rate of the positive electrode active material and affect the cycle performance of the secondary battery. Researchers have been working on improving the lithium ion diffusion rate of low-cobalt or cobalt-free cathode active materials, but there is no good solution yet.

The inventors of the present application unexpectedly discovered in the course of their research that the B atom in the compound structure represented by Formula I is easy to combine with the O atom in the positive electrode active material, reducing the charge transfer impedance of the positive electrode active material and thereby reducing the diffusion resistance of lithium ions within the bulk phase of the positive electrode active material. Therefore, the low-cobalt or cobalt-free positive electrode active material can have an improved lithium ion diffusion rate, and the lithium ions in the bulk phase of the low-cobalt or cobalt-free positive electrode active material can be replenished to the surface in a timely manner to prevent the surface of the low-cobalt or cobalt-free positive active material from over-delithiation, thus stabilizing the crystal structure of the low-cobalt or cobalt-free positive active material. Since the crystal structure of the low-cobalt or cobalt-free positive electrode active material is more stable, the probability of the occurrence of problems such as structural properties, chemical properties or electrochemical properties of the positive electrode active material becoming unstable due to over-extraction of lithium from the surface of the low-cobalt or cobalt-free positive electrode active material, for example, irreversible distortion and increase in lattice defects of the positive electrode active material, is greatly reduced.

In some embodiments, d=0 and 0 < e < 0.50. Optionally, d=0 and 0<e≤0.45, d=0 and 0<e≤0.40, d=0 and 0<e≤0.35, d=0 and 0<e≤0.30, d=0 and 0< e≤0.25, d=0 and 0<e≤0.20, d=0 and 0<e≤0.15 or d=0 and 0<e≤0.10.

In some embodiments, e = 0 and 0 < d < 0.50. Optionally, e=0 and 0<d≤0.45, e=0 and 0<d≤0.40, e=0 and 0<d≤0.35, e=0 and 0<d≤0.30, e=0 and 0< d≤0.25, e=0 and 0<d≤0.20, e=0 and 0<d≤0.15 or e=0 and 0<d≤0.10.

In some embodiments, 0 < d < 0.50 and 0 < e < 0.50. Optionally, 0 < d ≤ 0.30 and 0 < e ≤ 0.10.

In some embodiments, g = 2 and h = 0.

In some embodiments, g = 0 and h = 2.

In some embodiments, 0 < g < 2, 0 < h < 2, and g + h = 2.

As an example, the layered materials of molecular formula LiₐNi_{b}Co_{c}Mn_{d}AlₑM_{f}O_{g}Aₕ include but are not limited to at least one of LiNi_{0.8}Co_{0.1}Mn_{0.1}O₂, LiNi_{0.6}Co_{0.2}Mn_{0.2}O₂, LiNi_{0.5}Co_{0.2}Mn_{0.3}O₂, LiNi_{0.8}Co_{0.05}Mn_{0.15}O₂, LiNi_{0.7}Mn_{0.3}O₂, LiNi_{0.69}Co_{0.01}Mn_{0.5}O₂, LiNi_{0.68}Co_{0.02}Mn_{0.3}O₂, LiNi_{0.65}Co_{0.05}Mn_{0.3}O₂, LiNi_{0.63}Co_{0.07}Mn_{0.3}O₂, and LiNi_{0.61}Co_{0.09}Mn_{0.3}O₂.

LiₐNi_{b}Co_{c}Mn_{d}AlₑM_{f}O_{g}Aₕ can be prepared according to conventional methods in the art. Exemplary preparation methods are as follows: a lithium source, a nickel source, a cobalt source, a manganese source, an aluminum source, an M-element precursor, and an A-element precursor are mixed and sintered. The sintering atmosphere may be an oxygen-containing atmosphere, for example, an air atmosphere or an oxygen atmosphere. The O2 concentration of the sintering atmosphere is, for example, from 70% to 100%. The sintering temperature and sintering time can be adjusted according to the actual situation.

As an example, the lithium source includes, but is not limited to, at least one of lithium oxide (Li₂O), lithium phosphate (Li₃PO₄), lithium dihydrogen phosphate (LiH₂PO₄), lithium acetate (CH₃COOLi), lithium hydroxide (LiOH), lithium carbonate (Li₂CO₃), and lithium nitrate (LiNO₃). As an example, the nickel source includes but not limited to at least one of nickel sulfate, nickel nitrate, nickel chloride, nickel oxalate and nickel acetate. As an example, the cobalt source includes but not limited to at least one of cobalt sulfate, cobalt nitrate, cobalt chloride, cobalt oxalate and cobalt acetate. As an example, the source of manganese includes but not limited to at least one of manganese sulfate, manganese nitrate, manganese chloride, manganese oxalate and manganese acetate. As an example, the aluminum source includes, but is not limited to, at least one of aluminum sulfate, aluminum nitrate, aluminum chloride, aluminum oxalate, and aluminum acetate. As an example, the element M precursor includes, but is not limited to, at least one of an oxide of the element M, a nitrate compound of the element M, a carbonate compound of the element M, a hydroxide compound of the element M, and an acetate compound of the element M. As an example, the precursors of element A include but are not limited to ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium hydrogen sulfide, hydrogen sulfide, lithium sulfide, ammonium sulfide and elemental sulfur at least one.

In some embodiments, the content of the layered material with the molecular formula of LiₐNi_{b}Co_{c}Mn_{d}AlₑM_{f}O_{g}Aₕ is from 80% to 99%, based on the total mass of the positive active material layer. For example, the mass content of the layered material with the molecular formula of LiₐNi_{b}Co_{c}Mn_{d}AlₑM_{f}O_{g}Aₕ may be 80%, 81%, 82%, 83%, 84%, 85%, 86%, 87%, 88%, 89%, 90%, 91%, 92%, 93%, 94%, 95%, 96%, 97%, 98%, 99% or any range formed by the above values. Optionally, the layered material with the molecular formula of LiₐNi_{b}Co_{c}Mn_{d}AlₑM_{f}O_{g}Aₕ has a content of from 85% to 99%, from 90% to 99%, from 95% to 99%, from 80% to 98%, from 85% to 98%, from 90% to 98%, from 95% to 98%, from 80% % to 97%, from 85% to 97%, from 90% to 97%, or from 95% to 97%.

In some embodiments, the positive electrode film layer may also optionally comprise a conductive agent for positive electrode. The present application does not particularly limit the type of conductive agent for positive electrode, and as an example, the conductive agent for positive electrode includes at least one of superconducting carbon, conductive graphite, acetylene black, carbon black, Ketjen black, carbon dots, carbon nanotubes, graphene, and carbon nanofibers. In some embodiments, the mass content of the conductive agent for positive electrode is below 5%, based on the total mass of the positive electrode film layer.

In some embodiments, the positive electrode film layer may further optionally comprise a binder for positive electrode. The present application does not particularly limit the type of the binder for positive electrode, and as an example, the binder for positive electrode may include at least one of polyvinylidene fluoride (PVDF), polytetrafluoroethylene (PTFE), vinylidene fluoride-tetrafluoroethylene-propylene terpolymer, vinylidene fluoride-hexafluoropropylene -tetrafluoroethylene terpolymer, vinylidene fluoride-hexafluoropropylene copolymer, and fluorinated acrylate resins. In some embodiments, the mass content of the conductive agent for positive electrode is below 5%, based on the total mass of the positive electrode film layer.

In some embodiments, the positive electrode current collector may be a metal foil or a composite current collector. As an example of the metal foil, aluminum foil may be used. The composite current collector may include a base layer of polymeric material and a layer of metallic material formed on at least one surface of the base layer of polymeric material. As an example, the metal material may be selected from at least one of aluminum, aluminum alloy, nickel, nickel alloy, titanium, titanium alloy, silver, and silver alloy. As an example, the base layer of polymeric material can be selected from polypropylene (PP), polyethylene terephthalate (PET), polybutylene terephthalate (PBT), polystyrene (PS), poly Ethylene (PE), and the like.

In some embodiments, the compacted density of the positive electrode plate is from 2.6 g/cm³ to 3.7 g/cm³, optionally from 3.4 g/cm³ to 3.7 g/cm³. The non-aqueous electrolyte of the present application helps to match the high-pressure compacted and thickly coated positive electrode, thereby further improving the energy density of the secondary battery.

The positive electrode film layer is usually formed by applying a positive electrode slurry on a positive electrode current collector, drying and cold-pressing. The positive electrode slurry is usually formed by dispersing positive electrode active material, an optional conductive agent, an optional binder and any other components in a solvent and stirring them uniformly. The solvent may be N-methylpyrrolidone (NMP), but is not limited thereto.

### [Negative electrode plate]

In some embodiments, the negative electrode plate comprises a negative positive electrode current collector and a negative electrode film layer which is disposed on at least one surface of the negative electrode current collector and comprises a negative electrode active material. For example, the negative current collector has two opposite surfaces along the thickness direction of the negative current collector, and the positive electrode film layer is disposed on any one or both of the two opposite surfaces of the negative current collector.

The negative electrode active material can be a negative electrode active material well known in the art for secondary batteries. As an example, the negative electrode active material includes but not limited to at least one of natural graphite, artificial graphite, soft carbon, hard carbon, silicon-based material, tin-based material, and lithium titanate. The silicon-based material may include at least one of elemental silicon, silicon oxide, silicon-carbon composite, silicon-nitrogen composite, and silicon alloy. The tin-based material may include at least one of elemental tin, tin oxide, and tin alloy materials. The present application is not limited to these materials, but may use other conventionally known materials that can be used as negative active materials for secondary batteries. These negative electrode active materials may be used alone or in combination of two or more.

In some embodiments, the negative electrode film layer may also optionally comprise a conductive agent for negative electrode. The present application does not particularly limit the type of conductive agent for negative electrode, and as an example, the conductive agent for negative electrode includes at least one of superconducting carbon, conductive graphite, acetylene black, carbon black, Ketjen black, carbon dots, carbon nanotubes, graphene, and carbon nanofibers. In some embodiments, the mass content of the conductive agent for negative electrode is below 5%, based on the total mass of the negative electrode film layer.

In some embodiments, the negative electrode film layer may further optionally comprises a binder for negative electrode. The present application does not particularly limit the type of the binder for negative electrode, and as an example, the binder for negative electrode may include at least one of styrene-butadiene rubber (SBR), water-soluble unsaturated resin SR-1B, aqueous acrylic resins (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, the mass content of the conductive agent for negative electrode is below 5%, based on the total mass of the negative electrode film layer.

In some embodiments, the negative electrode film layer may further optionally comprises other auxiliary agents. As examples, other auxiliary agents may include thickeners, e.g., sodium carboxymethylcellulose (CMC-Na), PTC thermistor material, etc. In some embodiments, the mass content of the other auxiliary agents is below 2%, based on the total mass of the negative electrode film layer.

In some embodiments, the negative electrode collector may be a metal foil or a composite collector. As an example of a metal foil, a copper foil may be used. The composite current collector may include a base layer of polymeric material and a layer of metallic material formed on at least one surface of the base layer of polymeric material. As an example, the metal material can be selected from at least one of aluminum, aluminum alloy, nickel, nickel alloy, titanium, titanium alloy, silver, and silver alloy. As an example, the base layer of polymeric material can be selected from polypropylene (PP), polyethylene terephthalate (PET), polybutylene terephthalate (PBT), polystyrene (PS), poly Ethylene (PE), and the like.

In some embodiments, the compaction density of the negative electrode plate ranges from 1.4 g/cm³ to 2.0 g/cm³, optionally ranging from 1.5 g/cm³ to 2.0 g/cm³. The non-aqueous electrolyte of the application is helpful to match the high-pressure compacted and thickly coated negative electrode, thus further improving the energy density of the secondary battery.

The negative electrode film layer is usually formed by applying a negative electrode slurry on a negative electrode collector, drying and cold-pressing. The negative electrode slurry is typically formed by dispersing the negative active material, optional conductive agent, optional binder, other optional auxiliary agents in a solvent and stirring well. The solvent may be N-methylpyrrolidone (NMP) or deionized water, but is not limited thereto.

### [Separator]

The separator is arranged between the positive electrode plate and the negative electrode plate and is mainly used to prevent the short circuit between the positive electrode and the negative electrode and at the same time allows lithium ions to pass through. The type of the separator is not particularly limited in the present application, and any well-known porous structure separator having electrochemical stability and mechanical stability can be selected.

In some embodiments, the separator may include at least one of glass fiber, non-woven fabric, polyethylene, polypropylene, and polyvinylidene fluoride. The separator can be a single-layer film or a multilayer film. When the separator is a multilayer film, the materials of each layer may be the same or different.

The preparation method of the secondary battery of the present application is well known. In some embodiments, a positive electrode plate, a separator, a negative electrode plate, and a non-aqueous electrolyte can be assembled to form a secondary battery. As an example, the positive electrode plate, the separator, and the negative electrode plate can be formed into an electrode assembly by a winding process or a laminating process; the battery assembly is placed in an outer package, into which the non-aqueous electrolyte is injected after it is dried. After that, the processes of vacuum packing, steady standing, formation, and shaping are carried out, thereby obtaining a secondary battery.

In some embodiments, the secondary battery of the present application can be assembled into a battery module, and the number of secondary batteries contained in the battery module can be multiple, and the specific number can be adjusted according to the application and capacity of the battery module.

Fig. 3 is a schematic diagram of a battery module 4 as an example. Referring to Fig. 3, in the battery module 4, a plurality of secondary batteries 5 may be disposed sequentially in the length direction of the battery module 4. Apparently, they may also be disposed in any other manner. Furthermore, the plurality of secondary batteries 5 may be fixed by fasteners.

Optionally, the battery module 4 may further include a housing having an accommodating space in which a plurality of secondary batteries 5 are accommodated.

In some embodiments, the above-mentioned battery module may also be assembled into a battery pack, and the number of battery modules contained in the battery pack can be adjusted according to the application and capacity of the battery pack.

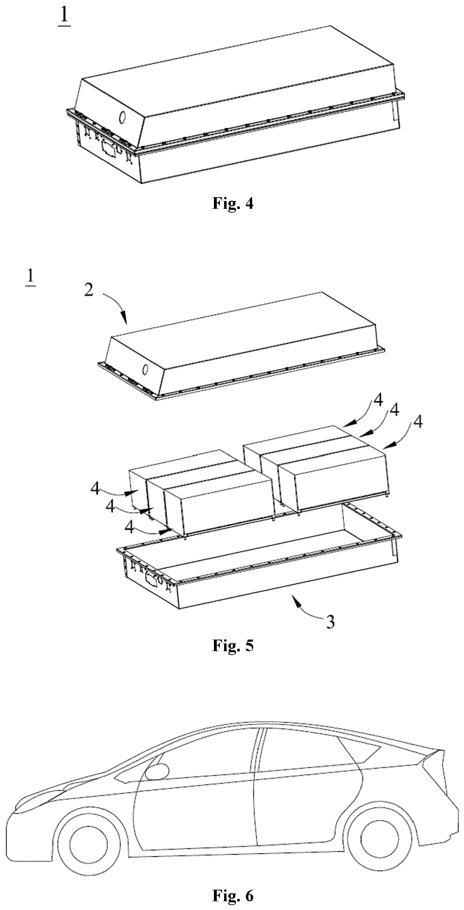

Figs. 4 and 5 are schematic diagrams of battery pack 1 as an example. As shown in Figs. 4 and 5, the battery pack 1 may comprise a battery case and a plurality of the battery modules 4 disposed in the battery case. The battery case comprises an upper case body 2 and a lower case body 3. The upper case body 2 is used for covering the lower case body 3 to form a closed space for receiving the battery modules 4. A plurality of battery modules 4 can be disposed in the battery case in any manner.

Embodiments of the present application further provide an electrical device comprising at least one of the secondary battery, battery module, and battery pack of the present application. The secondary battery, battery module or battery pack can be used as a power source of the electrical device, and can also be used as an energy storage unit of the electrical device. The electrical device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

The electrical device may comprise the secondary battery, the battery module or the battery pack selected according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, etc. The electric device is generally required to be light and thin, and a secondary battery can be used as a power source.

### Examples

The following examples are intended to describe the present application more specifically, merely for the purpose of illustration. Various modifications and variations within the scope of the present application are apparent to those skilled in the related art. Unless otherwise stated, all parts, percentages, and ratios reported in the following examples are based on mass, and all reagents used in the examples are commercially available or synthesized by conventional methods, and can be directly obtained without further treatment, and the instruments used in the examples are commercially available.

### The secondary batteries of Examples 1-36 and Comparative Examples 1-3 were prepared according to the following method.

### Preparation of positive electrode plate

The positive electrode active material LiNi_{0.6}Co_{0.2}Mn_{0.2}O₂, the conductive agent carbon black, and the binder polyvinylidene fluoride (PVDF) were mixed at a mass ratio of 97.5:1.4:1.1 in an appropriate amount of solvent NMP with thorough stirring to form a uniform positive electrode slurry; the positive electrode slurry was uniformly applied on the surface of the positive electrode collector aluminum foil, and after being dried and cold pressed, the positive electrode plate was obtained.

### Preparation of negative electrode plate

The negative active material graphite, the binder butadiene rubber (SBR), the thickener sodium carboxymethyl cellulose (CMC-Na), and the conductive agent carbon black (Super P) were mixed at a mass ratio of 96.2:1.8:1.2:0.8 in an appropriate amount of deionized water as solvent with thorough stirring to form a uniform negative electrode slurry; the negative electrode slurry was evenly applied on the surface of the negative electrode collector copper foil, and after being dried and cold pressed, the negative electrode plate was obtained.

### Separator

A porous polyethylene (PE) film was used as the separator.

### Preparation of non-aqueous electrolyte

The first solvent, the second solvent, and the third solvent were mixed uniformly according to the compositions shown in Table 1 to obtain an organic solvent, and then the compounds shown in Formula I, the first lithium salt, the second lithium salt, and the third lithium salt, fluoroethylene carbonate (FEC), and a moisture scavenger according to the composition shown in Table 1 were added to an organic solvent and mixed uniformly to obtain a non-aqueous electrolyte. In Table 1, the content A1% of the compound shown in Formula I, the content A2% of the first lithium salt, the content A3% of the second lithium salt, the content A4% of the third lithium salt, the content C1% of FEC and the content C2% of the moisture scavenger were based on the total mass of the non-aqueous electrolyte; the content D1% of the first solvent, the content D2% of the second solvent and the content D3% of the third solvent were all based on the total mass of the organic solvent; "/" indicated that the corresponding component was not added.

### Preparation of secondary battery

The positive electrode plate, the separator, the negative electrode plate as prepared above were stacked and wound in order to obtain an electrode assembly; the electrode assembly was put into a battery housing, followed by welding the cover plate, injecting the above non-aqueous electrolyte, and then the processes of encapsulation, standing, formation, aging, and the like to obtain a hard shell secondary battery having square structure. The group margin B of the secondary battery was shown in Table 1, and was obtained by the following test method: the group margin B of the secondary battery=L2/ L1, in which the internal thickness of the battery housing to be tested was denoted as L1, and the thickness of the electrode assembly to be tested was denoted as L2.

### Test section

### (1) Test for mass energy density of secondary battery

At 25°C, the secondary battery was charged to 4.3V with a constant current of 0.33C, and continued to charge at constant voltage until the current was 0.05C; after standing for 5 min, the secondary battery was discharged to 2.8V with a constant current of 0.33C, and then the discharge energy Q was obtained. The mass energy density of the secondary battery (Wh/Kg) = discharge energy Q/mass m of the secondary battery.

### (2) Test for storage performance of secondary battery

At 60°C, the secondary battery was charged to 4.3V with a constant current of 1C, and continued to charge at constant voltage until the current was 0.05C, at which time the volume of the secondary battery was tested by the drainage method and recorded as V₀. The secondary battery was placed in a thermostat at 60°C and stored for 30 days and then removed, at which time the volume of the secondary battery was tested by the drainage method and recorded as Vi. The volume expansion rate (%) of the secondary battery after storage at 60°C for 30 days = [(Vi-V₀)/V₀] × 100%.

### (3) Test for cycle performance of secondary battery

At 45°C, the secondary battery was charged to 4.3V with a constant current of 1C, continued to charge at constant voltage until the current was 0.05C, at which time the secondary battery was in a fully charged state and the charge capacity was recorded, i.e. the charge capacity of the first cycle; After the secondary battery was allowed for standing for 5 min, it was discharged to 2.8V with a constant current of 1C, which was a cyclic charge-discharge process and at which time the discharge capacity was recorded, i.e. the discharge capacity after the first cycle. The secondary battery was subjected to the above cyclic charge-discharge process, and the discharge capacity after each cycle was recorded. Capacity retention rate (%) of secondary battery at 45°C after 600 cycles = discharge capacity after 600 cycles/discharge capacity after the 1 st cycle× 100%.

### (4) Test for direct current impedance of secondary battery

At 25°C, the secondary battery was charged at a constant current of 1C to 4.3V, continued to charge at a constant voltage until the current is 0.05C, at which time the secondary battery was fully charged; the secondary battery was discharged at a constant current of 0.5C and adjusted to reach 50% SOC, at which time the voltage of the secondary battery was recorded as Ui; The secondary battery was discharged at a constant current I₁ of 4C for 30 seconds, tested at a sampling step of 0.1 second to collect points, and the voltage at the end of discharge was recorded as U₂. The discharge DC internal resistance of the secondary battery at 50% SOC was used to represent the initial DC internal resistance of the secondary battery, and the initial DC internal resistance (mΩ) of the secondary battery = (U₁-U₂)/I₁.

Table 1 shows the preparation parameters of Examples 1 to 36 and Comparative Examples 1 to 3, and Table 2 shows the test results of Examples 1 to 36 and Comparative Examples 1 to 3 according to the above test methods for testing performance.

**Table 1**

| Serial number | group margin B | Compound represented by Formula 1 | | The first lithium salt | | The second lithium salt | | The third lithium salt | | FEC content C1(%) | Moisture scavenger | | The first solvent | | The second solvent | | The third solvent | |
|---|---|---|---|---|---|---|---|---|---|---|---|---|---|---|---|---|---|---|
| | | Types | content A1(%) | Types | content A2(%) | Types | content A3(%) | Types | content A4(%) | | Types | content C2 (%) | Types | content D1(%) | Types | content D2(%) | Types | content D3(%) |
| Example 1 | 0.9 | H3 | 0.02 | LiPF₆ | 12 | LiFSI | 0.5 | / | / | / | / | / | EC | 18 | EMC | 80 | EA | 2 |
| Example 2 | 0.9 | H3 | 0.05 | LiPF₆ | 12 | LiFSI | 0.5 | / | / | / | / | / | EC | 18 | EMC | 80 | EA | 2 |
| Example 3 | 0.9 | H3 | 0.08 | LiPF₆ | 12 | LiFSI | 0.5 | / | / | / | / | / | EC | 18 | EMC | 80 | EA | 2 |
| Example 4 | 0.9 | H3 | 0.1 | LiPF₆ | 12 | LiFSI | 0.5 | / | / | / | / | / | EC | 18 | EMC | 80 | EA | 2 |
| Example 5 | 0.9 | H3 | 0.2 | LiPF₆ | 12 | LiFSI | 0.5 | / | / | / | / | / | EC | 18 | EMC | 80 | EA | 2 |
| Example 6 | 0.9 | H3 | 0.3 | LiPF₆ | 12 | LiFSI | 0.5 | / | / | / | / | / | EC | 18 | EMC | 80 | EA | 2 |
| Example 7 | 0.9 | H3 | 0.5 | LiPF₆ | 12 | LiFSI | 0.5 | / | / | / | / | / | EC | 18 | EMC | 80 | EA | 2 |
| Example 8 | 0.9 | H3 | 1 | LiPF₆ | 12 | LiFSI | 0.5 | / | / | / | / | / | EC | 18 | EMC | 80 | EA | 2 |
| Example 9 | 0.9 | H3 | 1.9 | LiPF₆ | 12 | LiFSI | 0.5 | / | / | / | / | / | EC | 18 | EMC | 80 | EA | 2 |
| Example 10 | 0.9 | H3 | 0.1 | LiPF₆ | 12 | / | / | / | / | / | / | / | EC | 18 | EMC | 80 | EA | 2 |
| Example 11 | 0.9 | H3 | 0.1 | LiPF₆ | 12 | LiFSI | 0.1 | / | / | / | / | / | EC | 18 | EMC | 80 | EA | 2 |
| Example 12 | 0.9 | H3 | 0.1 | LiPF₆ | 12 | LiFSI | 1 | / | / | / | / | / | EC | 18 | EMC | 80 | EA | 2 |
| Example 13 | 0.9 | H3 | 0.1 | LiPF₆ | 12 | LiFSI | 2 | / | / | / | / | / | EC | 18 | EMC | 80 | EA | 2 |
| Example 14 | 0.9 | H3 | 0.1 | LiPF₆ | 12 | LiFSI | 2.5 | / | / | / | / | / | EC | 18 | EMC | 80 | EA | 2 |
| Example 15 | 0.9 | H3 | 0.1 | LiPF₆ | 12 | LiFSI | 0.5 | / | / | 0.5 | / | / | EC | 18 | EMC | 80 | EA | 2 |
| Example 16 | 0.9 | H3 | 0.1 | LiPF₆ | 12 | LiFSI | 0.5 | / | / | 1 | / | / | EC | 18 | EMC | 80 | EA | 2 |
| Example 17 | 0.9 | H3 | 0.1 | LiPF₆ | 12 | LiFSI | 0.5 | / | / | 2 | / | / | EC | 18 | EMC | 80 | EA | 2 |
| Example 18 | 0.9 | H3 | 0.1 | LiPF₆ | 12 | LiFSI | 0.5 | / | / | 3 | / | / | EC | 18 | EMC | 80 | EA | 2 |
| Example 19 | 0.9 | H3 | 0.1 | LiPF₆ | 12 | LiFSI | 0.5 | / | / | 5 | / | / | EC | 18 | EMC | 80 | EA | 2 |
| Example 20 | 0.9 | H3 | 0.1 | LiPF₆ | 12 | LiFSI | 0.5 | / | / | 2 | HMDS | 0.2 | EC | 18 | EMC | 80 | EA | 2 |
| Example 21 | 0.9 | H3 | 0.1 | LiPF₆ | 12 | LiFSI | 0.5 | / | / | 2 | TMSP | 0.2 | EC | 18 | EMC | 80 | EA | 2 |
| Example 22 | 0.88 | H3 | 0.1 | LiPF₆ | 12 | LiFSI | 0.5 | / | / | 2 | / | / | EC | 18 | EMC | 80 | EA | 2 |
| Example 23 | 0.92 | H3 | 0.1 | LiPF₆ | 12 | LiFSI | 0.5 | / | / | 2 | / | / | EC | 18 | EMC | 80 | EA | 2 |
| Example 24 | 0.97 | H3 | 0.1 | LiPF₆ | 12 | LiFSI | 0.5 | / | / | 2 | / | / | EC | 18 | EMC | 80 | EA | 2 |
| Example 25 | 0.99 | H3 | 0.1 | LiPF₆ | 12 | LiFSI | 0.5 | / | / | 2 | / | / | EC | 18 | EMC | 80 | EA | 2 |
| Example 26 | 0.9 | H2 | 0.1 | LiPF₆ | 12 | LiFSI | 0.5 | / | / | 2 | / | / | EC | 18 | EMC | 80 | EA | 2 |
| Example 27 | 0.9 | H1 | 0.1 | LiPF₆ | 12 | LiFSI | 0.5 | / | / | 2 | / | / | EC | 18 | EMC | 80 | EA | 2 |
| Example 28 | 0.9 | H7 | 0.1 | LiPF₆ | 12 | LiFSI | 0.5 | / | / | 2 | / | / | EC | 18 | EMC | 80 | EA | 2 |
| Example 29 | 0.9 | H11 | 0.1 | LiPF₆ | 12 | LiFSI | 0.5 | / | / | 2 | / | / | EC | 18 | EMC | 80 | EA | 2 |
| Example 30 | 0.9 | H3 | 0.1 | LiPF₆ | 6 | LiFSI | 0.5 | LiBF₄ | 6 | 2 | / | / | EC | 18 | EMC | 80 | EA | 2 |
| Example 31 | 0.9 | H3 | 0.1 | LiPF₆ | 8 | LiFSI | 0.5 | LiBF₄ | 4 | 2 | / | / | EC | 18 | EMC | 80 | EA | 2 |
| Example 32 | 0.9 | H3 | 0.1 | LiPF₆ | 10 | LiFSI | 0.5 | LiBF₄ | 2 | 2 | / | / | EC | 18 | EMC | 80 | EA | 2 |
| Example 33 | 0.9 | H3 | 0.1 | LiPF₆ | 12 | LiTFSI | 0.5 | / | / | 2 | / | / | EC | 18 | EMC | 80 | EA | 2 |
| Example 34 | 0.9 | H3 | 0.1 | LiPF₆ | 12 | LiFSI | 0.5 | / | / | 2 | / | / | EC | 20 | EMC | 80 | / | / |
| Example 35 | 0.9 | H3 | 0.1 | LiPF₆ | 12 | LiFSI | 0.5 | / | / | 2 | / | / | EC | 12 | EMC | 86 | EA | 2 |
| Example 36 | 0.9 | H3 | 0.1 | LiPF₆ | 12 | LiFSI | 0.5 | / | / | 2 | / | / | EC | 25 | EMC | 73 | EA | 2 |
| Comparative Example 1 | 0.9 | / | / | LiPF₆ | 12 | / | / | / | / | / | / | / | EC | 18 | EMC | 80 | EA | 2 |
| Comparative Example 2 | 0.9 | H3 | 0.01 | LiPF₆ | 12 | LiFSI | 0.5 | / | / | / | / | / | EC | 18 | EMC | 80 | EA | 2 |
| Comparative Example 3 | 0.9 | H3 | 2.5 | LiPF₆ | 12 | LiFSI | 0.5 | / | / | / | / | / | EC | 18 | EMC | 80 | EA | 2 |

**Table 2**

| No. | B/A1 | 10A1+A2/5 | A2/A1 | A3/A1 | C1/A1 | Energy density (Wh/Kg) | Volume expansion rate after 30 days of storage at 60°C | Capacity retention rate at 45°C for 600 cycles | Initial DC internal resistance (MΩ) |
|---|---|---|---|---|---|---|---|---|---|
| Example 1 | 45.0 | 2.6 | 600 | 25.0 | / | 270 | 12.5% | 82.6% | 22.5 |
| Example 2 | 18.0 | 2.9 | 240 | 10.0 | / | 270 | 10.7% | 84.5% | 20.4 |
| Example 3 | 11.3 | 3.2 | 150 | 6.3 | / | 270 | 10.5% | 84.7% | 20.5 |
| Example 4 | 9.0 | 3.4 | 120 | 5.0 | / | 270 | 12.1% | 82.3% | 22.1 |
| Example 5 | 4.5 | 4.4 | 60 | 2.5 | / | 270 | 12.5% | 82.1% | 22.6 |
| Example 6 | 3.0 | 5.4 | 40 | 1.7 | / | 270 | 12.8% | 81.7% | 22.9 |
| Example 7 | 1.8 | 7.4 | 24 | 1.0 | / | 270 | 13.1% | 80.5% | 23.7 |
| Example 8 | 0.9 | 12.4 | 12 | 0.5 | / | 270 | 14.4% | 80.1% | 24.1 |
| Example 9 | 0.5 | 21.4 | 6.3 | 0.3 | / | 270 | 15.8% | 79.5% | 24.7 |
| Example 10 | 9.0 | 3.4 | 120 | / | / | 270 | 12.9% | 81.4% | 23.6 |
| Example 11 | 9.0 | 3.4 | 120 | 1.0 | / | 270 | 12.7% | 81.9% | 23.1 |
| Example 12 | 9.0 | 3.4 | 120 | 10.0 | / | 270 | 10.4% | 83.6% | 21.9 |
| Example 13 | 9.0 | 3.4 | 120 | 20.0 | / | 270 | 10.3% | 84.1% | 21.4 |
| Example 14 | 9.0 | 3.4 | 120 | 25.0 | / | 270 | 12.5% | 82.5% | 22.4 |
| Example 15 | 9.0 | 3.4 | 120 | 5.0 | 5 | 270 | 12.7% | 83.1% | 21.6 |
| Example 16 | 9.0 | 3.4 | 120 | 5.0 | 10 | 270 | 12.9% | 84.2% | 20.5 |
| Example 17 | 9.0 | 3.4 | 120 | 5.0 | 20 | 270 | 13.0% | 84.5% | 20.8 |
| Example 18 | 9.0 | 3.4 | 120 | 5.0 | 30 | 270 | 13.2% | 84.9% | 21.2 |
| Example 19 | 9.0 | 3.4 | 120 | 5.0 | 50 | 270 | 14.1% | 82.7% | 22.9 |
| Example 20 | 9.0 | 3.4 | 120 | 5.0 | 20 | 270 | 11.0% | 86.2% | 21.9 |
| Example 21 | 9.0 | 3.4 | 120 | 5.0 | 20 | 270 | 11.4% | 86.9% | 22.4 |
| Example 22 | 8.8 | 3.4 | 120 | 5.0 | 20 | 264 | 12.7% | 86.1% | 18.3 |
| Example 23 | 9.2 | 3.4 | 120 | 5.0 | 20 | 276 | 13.3% | 82.3% | 21.0 |
| Example 24 | 9.7 | 3.4 | 120 | 5.0 | 20 | 285 | 13.7% | 81.4% | 21.4 |
| Example 25 | 9.9 | 3.4 | 120 | 5.0 | 20 | 297 | 14.3% | 80.9% | 21.9 |
| Example 26 | 9.0 | 3.4 | 120 | 5.0 | 20 | 270 | 13.3% | 84.1% | 21.0 |
| Example 27 | 9.0 | 3.4 | 120 | 5.0 | 20 | 270 | 13.5% | 83.6% | 21.4 |
| Example 28 | 9.0 | 3.4 | 120 | 5.0 | 20 | 270 | 13.8% | 83.7% | 21.8 |
| Example 29 | 9.0 | 3.4 | 120 | 5.0 | 20 | 270 | 13.7% | 83.2% | 21.4 |
| Example 30 | 9.0 | 2.2 | 60 | 5.0 | 20 | 270 | 14.1% | 83.1% | 21.7 |
| Example 31 | 9.0 | 2.6 | 80 | 5.0 | 20 | 270 | 13.9% | 83.8% | 21.3 |
| Example 32 | 9.0 | 3.0 | 100 | 5.0 | 20 | 270 | 13.2% | 83.5% | 21.9 |
| Example 33 | 9.0 | 3.4 | 120 | 5.0 | 20 | 270 | 14.3% | 83.0% | 22.4 |
| Example 34 | 9.0 | 3.4 | 120 | 5.0 | 20 | 270 | 13.3% | 84.1% | 20.4 |
| Example 35 | 9.0 | 3.4 | 120 | 5.0 | 20 | 270 | 11.3% | 84.3% | 22.7 |
| Example 36 | 9.0 | 3.4 | 120 | 5.0 | 20 | 270 | 15.3% | 84.3% | 20.1 |
| Comparative Example 1 | / | / | / | / | / | 270 | 22.9% | 71.3% | 25.9 |
| Comparative Example 2 | 90 | 2.5 | 1200 | 50 | / | 270 | 20.6% | 73.3% | 25.6 |
| Comparative Example 3 | 0.4 | 27.4 | 4.8 | 0.2 | / | 270 | 23.7% | 72.8% | 26.8 |

From the test results in Table 1 and Table 2, it can be seen that when the non-aqueous electrolyte comprises a compound represented by Formula I and its content A1% and the group margin B of the secondary battery satisfy the B/A1 of from 0.5 to 45, the secondary battery can simultaneously have high group margin design and high safety performance, and meanwhile have relatively low internal resistance and relatively high capacity retention rate. On the one hand, the compound represented by Formula I can form a uniform, dense and stable interphase film at both the positive electrode and the negative electrode simultaneously, which reduces the direct contact between the active material and the non-aqueous electrolyte and reduces the damage and regeneration of positive electrode interphase film and negative electrode interphase film, thereby reducing the generation of gas and the consumption of active lithium ions in the process and reducing battery expansion and improving the capacity retention rate of the battery; on the other hand, the compound represented by Formula I can also stabilize the crystal structure of positive electrode active material, reduce the precipitation of lattice oxygen and the dissolution of transition metal ion, thereby reducing a series of side reactions caused by the precipitation of lattice oxygen and the dissolution of transition metal ion and thereby reducing battery expansion.

From the comprehensive consideration of the test results of Examples 1 to 9 and Comparative Example 2, it can be seen that, when B/A1 is greater than 45, there is not enough compound represented by Formula I to form a uniform, dense and stable positive electrode interphase film and/or negative electrode interphase film. As a result, the crystal structure of the positive electrode active material cannot be effectively stabilized and the decomposition of the non-aqueous electrolyte cannot be effectively reduced, thereby resulting in more gas generated in the secondary battery and a higher volume expansion rate, so the secondary battery with a high group margin design still faces higher safety risks. At the same time, due to more interfacial side reactions between the non-aqueous electrolyte and the electrodes, the interface impedance of the positive electrode and/or the interface impedance of the negative electrode increase, resulting in higher internal resistance and lower capacity retention of the secondary battery.

From the test results of Examples 1 to 9 and Comparative Example 3, it can be seen that when B/A1 is less than 0.5, due to the formation of an overly thick positive electrode interphase film and/or negative electrode interphase film, the positive electrode interface impedance and/or the negative electrode interface impedance are relatively high, and thus the internal resistance of the secondary battery is relatively high and the capacity retention rate is relatively low. In addition, since the compound represented by Formula I has the structure containing an oxalate group, when its content is high, the gas generated due to self-decomposition increases, and the volume expansion rate of the secondary battery does not decrease but increases.

Based on the test results of Examples 1 to 9, it can also be seen that when the content A1% of the compound represented by Formula I and the content A2% of the first lithium salt satisfy the requirements of 0<10A1+A2/5 ≤ 15 and/or 10 ≤ A2/A1 ≤ 600, the overall performance of the secondary battery is further improved.

From comprehensive consideration of the test results of Examples 4, 10 to 14, it can also be seen that when the non-aqueous electrolyte further contains a second lithium salt and the content A3% of the second lithium salt and the content A1% of the compound shown in formula I satisfy 0.25≤A3/A1≤25, optionally, 4≤A3/A1≤20, the secondary battery may have a reduced volume expansion rate, a reduced internal resistance, and an improved capacity retention rate. The possible reasons are that the second lithium salt can improve the ionic conductivity, reduce the viscosity of non-aqueous electrolyte, and at the same time helps to form negative electrode interphase film with lower impedance and higher thermal stability.

From the comprehensive consideration of test results of Examples 4 and 15 to 19, it can also be seen that when non-aqueous electrolytic solution further contains additive FEC and its content C1% and the content A1% of the compound represented by Formula I satisfy 5≤C1/A1≤50, optionally, 10≤C1/A1≤30, it helps to improve the capacity retention rate of the secondary battery.

From the comprehensive consideration of test results of Examples 17 and 20 to 21, it can also be seen that when the non-aqueous electrolyte further contains a moisture scavenger, it helps to reduce the volume expansion rate of the secondary battery and improve the capacity retention rate of the secondary battery.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art and other implementations constructed by combining some building elements in the embodiments are also included in the scope of the present application..

## Claims

1. A secondary battery comprising a battery housing, an electrode assembly contained in the battery housing and a non-aqueous electrolyte, wherein,
the non-aqueous electrolyte comprises a compound represented by Formula I, in which X and Y each independently represent H atom, a halogen atom, C1-C20 alkyl group, C2-C20 alkenyl group, C2-C20 alkynyl group, C6-C20 aryl group, C1-C20 haloalkyl group, C2-C20 haloalkenyl group, C2-C20 haloalkyne group, C6-C20 haloaryl group, C1-C20 alkoxy group, C2-C20 alkenoxy group, C2-C20 alkynloxy group, C6-C20 aryloxy group, C1-C20 haloalkoxy group, C2-C20 haloalkenoxy group, C2-C20 haloalkynloxy group, C6-C20 haloaryloxy group or a combination thereof, and at least one of X and Y represents a fluorine atom or a group containing fluorine atom; 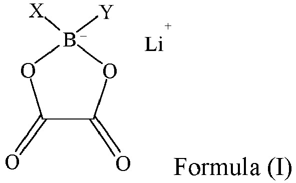
based on the total mass of the non-aqueous electrolyte, the compound represented by Formula I is present in an amount of A1% by mass; the secondary battery has a group margin B and the secondary battery satisfies: B is from 0.88 to 0.99, B/A1 is from 0.5 to 45.

2. The secondary battery according to claim 1, wherein
B is from 0.90 to 0.95; and/or,
B/A1 is from 4 to 20, optionally from 10 to 20.

3. The secondary battery according to claim 1 or 2, wherein A1 is greater than or equals to 0.02 and less than 2, and optionally, A1 is from 0.02 to 1.

4. The secondary battery according to any one of claims 1-3, wherein the non-aqueous electrolyte further comprises a first lithium salt being lithium hexafluorophosphate, and wherein the first lithium salt is present in an amount of A2% by mass of greater than 0 and less than or equal to 14, optionally from 6 to 14, based on the total mass of the non-aqueous electrolyte,
optionally, 10≤A2/A1≤600, more optionally 60≤A2/A1≤600.

5. The secondary battery according to any one of claims 1-4, wherein the non-aqueous electrolyte further comprises a first lithium salt being lithium hexafluorophosphate, and wherein the first lithium salt is present in an amount of A2% by mass based on the total mass of the non-aqueous electrolyte, and 0< 10A1+A2/5≤15, optionally, 2.6≤10A1+A2/5≤5.

6. The secondary battery according to any one of claims 4-5, wherein the non-aqueous electrolyte further comprises a second lithium salt being lithium (fluorosulfonyl)imide salt, optionally the lithium (fluorosulfonyl)imide salt has a formula of LiN(SO₂R₁)(SO₂R₂), wherein Ri and R₂ independently represent F or CₙF₂ₙ₊₁, where n is an integer from 1 to 10, and the second lithium salt is present in an amount of A3% by mass, based on the total mass of the non-aqueous electrolyte,
optionally, 0<A3≤2.5, more optionally, 0.5≤A3≤2.0; and/or
optionally, 0.25≤A3/A1≤25, more optionally, 4≤A3/A1≤20.

7. The secondary battery according to claim 6, wherein A3/A2 is 0.5 or less, optionally 0.02 to 0.2.

8. The secondary battery according to any one of claims 1-7, wherein the non-aqueous electrolyte further comprises fluoroethylene carbonate at a mass content of C1%, based on the total mass of the non-aqueous electrolyte;
optionally, 0 < C1 ≤5, more optionally, 0.5 < C1 ≤ 3; and/or
optionally, 5≤C1/A1≤50, more optionally, 10≤C1/A1≤30.

9. The secondary battery according to any one of claims 1-8, wherein the non-aqueous electrolyte further comprises a moisture scavenger comprising hexamethyldisilazane, tris(trimethylsilyl)phosphate or combination thereof, the moisture scavenger is present in an amount of C2% by mass, based on the total mass of the non-aqueous electrolyte;
optionally, C2 is greater than 0 and less than or equal to 2, more optionally from 0.01 to 2.

10. The secondary battery according to any one of claims 1-9, wherein the non-aqueous electrolyte comprises an organic solvent, and the organic solvent comprises:
a first solvent, comprising at least one of ethylene carbonate, propylene carbonate, butyl carbonate, vinylene carbonate, and vinyl ethylene carbonate, present in an amount of D1% by mass in the organic solvent, based on the total mass of the organic solvent;
a second solvent, comprising at least one of methyl ethyl carbonate, diethyl carbonate, dimethyl carbonate, dipropyl carbonate, methyl propyl carbonate, and ethylene propyl carbonate, present in an amount of D2% by mass in the organic solvent, based on the total mass of the organic solvent;
a third solvent, comprising at least one of methyl formate, methyl acetate, ethyl acetate, propyl acetate, methyl propionate, ethyl propionate, propyl propanoate, methyl butyrate, and ethyl butyrate, present in an amount of D3% by mass in the organic solvent, based on the total mass of the organic solvent,
the organic solvent satisfies the following requirements: D1 is greater than 0 and less than or equal to 20, D2 is from 50 to 90, and D3 is from 0 to 30,
optionally, D1 is from 0.5 to 20, and more optionally, from 10 to 20.

11. The secondary battery according to any one of claims 1-10, wherein the electrode assembly comprises a positive electrode plate and a negative electrode plate, the capacity of the positive electrode plate is Q1 Ah, the capacity of the negative electrode plate is Q2 Ah, and the secondary battery satisfies: 1<Q2/Q1<1.05 and A1<B.

12. The secondary battery according to any one of claims 1-11, wherein at least one of X and Y represents a fluorine atom, and optionally, both X and Y represent a fluorine atom.

13. The secondary battery according to any one of claims 1-11, wherein the compound represented by formula I comprises at least one of the following compounds,

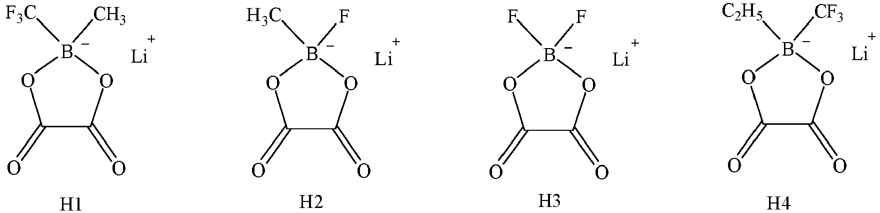

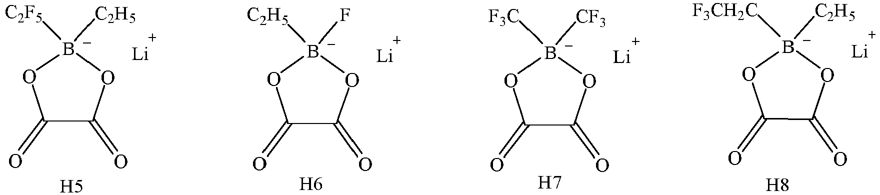

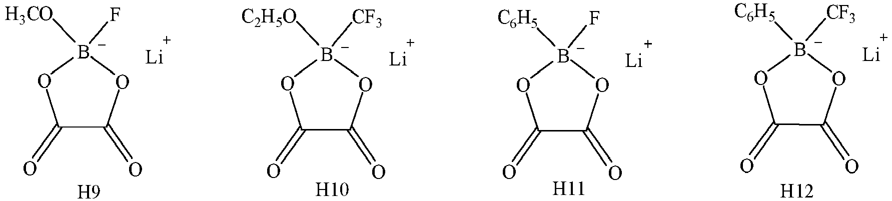

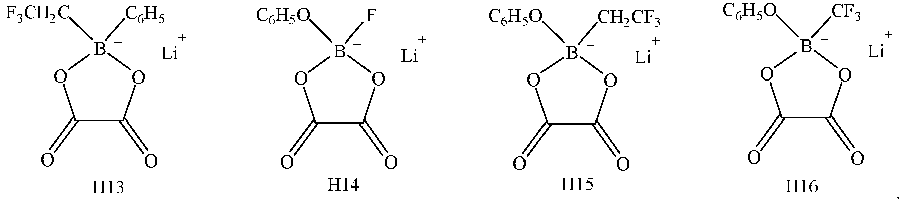

14. The secondary battery according to any one of claims 1-13, wherein the battery housing is made of at least one of hard plastic casing, aluminum, and stainless steel.

15. A battery module comprising the secondary battery according to any one of claims 1 to 14.

16. A battery pack, comprising one of the secondary battery according to any one of claims 1 to 14 and the battery module according to claim 16.

17. An electrical device comprising at least one of the secondary battery according to any one of claims 1 to 14, the battery module according to claim 15 and the battery pack according to claim 16.
